# EUROPÄISCHE PATENTSCHRIFT

(11) **EP 3 835 093 B1**
(45) Veröffentlichungstag und Bekanntmachung des Hinweises auf die Patenterteilung: **27.03.2024**
(21) Anmeldenummer: 21153350.0
(22) Anmeldetag: 31.01.2018
(51) Int. Cl.: B60D 1/06, B60D 1/54, B60D 1/62

(54) **ANHÄNGEKUPPLUNG**
TRAILER COUPLING
CROCHET D'ATTELAGE

(30) Priorität: 08.02.2017 DE 102017102504
(43) Veröffentlichungstag der Anmeldung: 16.06.2021
(62) Teilanmeldung aus: 18154409.9
(73) Patentinhaber: ACPS Automotive GmbH, 74379 Ingersheim (DE)
(72) Erfinder: Kadnikov, Aleksej, 71229 Leonberg (DE); Gentner, Wolfgang, 71711 Steinheim (DE); Rimmelspacher, Bernhard, 76287 Rheinstetten (DE)
(74) Vertreter: Hoeger, Stellrecht & Partner Patentanwälte mbB

(56) Entgegenhaltungen:
- EP-A1- 2 801 487
- DE-A1-102015 204 900

## Beschreibung

Die Erfindung betrifft eine Anhängekupplung umfassend eine fahrzeugfest an einem Heckbereich einer Fahrzeugkarosserie, insbesondere mittels einer Halteeinheit, montierbare Lagereinheit, welche eine Lagerbasis und einen an dieser bewegbar gelagerten Kugelhalsträger aufweist, und ferner umfassend einen Kugelhals, der an einem ersten Ende fest mit dem Kugelhalsträger verbunden ist und an einem zweiten Ende eine Kupplungskugel trägt und der durch das Bewegen des Kugelhalsträgers relativ zur Lagerbasis zwischen zwei Endstellungen bewegbar ist, von denen eine eine Arbeitsstellung ist, in welcher der Kugelhals sich im Wesentlichen in einer vertikalen Längsmittelebene der Anhängekupplung erstreckt, die insbesondere im an der Fahrzeugkarosserie montierten Zustand mit einer vertikalen Fahrzeuglängsmittelebene der Fahrzeugkarosserie zusammenfällt, und von denen die andere eine Ruhestellung ist, in welcher sich der Kugelhals quer zur vertikalen Längsmittelebene der Anhängekupplung erstreckt, wobei ein Sensorsystem einen ersten, mit dem Kugelhalsträger oder dem Kugelhals mitschwenkbar angeordneten Sensor und eine mit dem ersten Sensor verbundene Auswerteieinheit umfasst.

Derartige Anhängekupplungen sind aus dem Stand der Technik, insbesondere aus der EP 2 801 487 A1, bekannt.

Bei derartigen Anhängekupplungen erfolgt üblicherweise eine Erfassung der Endstellung durch einen der Endstellung oder durch einen einer in der Endstellung wirksamen Schwenkblockiereinrichtung zugeordneten Tastschalter.

Diese Lösungen haben den Nachteil, dass bei einigen Betriebszuständen eine eindeutige Erfassung der Stellung des Kugelhalses nicht möglich ist.

Der Erfindung liegt daher die Aufgabe zugrunde, eine Anhängekupplung der eingangs beschriebenen Art derart zu verbessern, dass eine möglichst einfache und eindeutige Erfassung der Stellung des Kugelhalses möglich ist.

Diese Aufgabe wird bei einer Anhängekupplung der eingangs beschriebenen Art erfindungsgemäß dadurch gelöst, dass zur Erfassung der Stellung des Kugelhalses relativ zur Lagerbasis das Sensorsystem vorgesehen ist, welches die Stellungen des Kugelhalses relativ zu der fahrzeugfesten Lagerbasis erfasst und eine für die jeweilige Stellung des Kugelhalses repräsentative Stellungsinformation erzeugt, dass die Auswerteeinheit zur Bestimmung der Stellung des Kugelhalses Sensorsignale des ersten Sensors mit der jeweiligen Stellung zugeordneten Referenzwerten vergleicht und dadurch Stellungsinformationen für den Kugelhals erzeugt, dass das Sensorsystem einen zweiten mit der Lagerbasis fest verbundenen Sensor umfasst und dass die Auswerteeinheit mit dem ersten Sensor und dem zweiten Sensor verbunden ist und die Differenzwerte zwischen dem ersten Sensor und dem zweiten Sensor erfasst und zur Bestimmung der Stellung des Kugelhalses mit abgespeicherten, der jeweiligen Stellung zugeordneten Referenzwerten für die Differenzwerte vergleicht und dadurch die Stellungsinformationen für den Kugelhals erzeugt.

Der Vorteil der erfindungsgemäßen Lösung ist darin zu sehen, dass nunmehr die Möglichkeit besteht, mit dem Sensorsystem die Stellungen des Kugelhalses eindeutig und unmittelbar zu erfassen, ohne dass eine indirekte Erfassung der jeweiligen Stellung erforderlich ist.

Beispielsweise werden die Referenzwerte im Rahmen eines Lernvorgangs ermittelt und dann abgespeichert.

Mit dieser Lösung, die einen zweiten Sensor umfasst, besteht die Möglichkeit, Bewegungen der Lagerbasis, die bei ausschließlicher Betrachtung der Signale des ersten Sensors zusätzliche Störeinflüsse darstellen würden, zu eliminieren und somit die Präzision der Erfassung der Stellung des Kugelhalses zu verbessern.

Vorzugsweise ist bei der erfindungsgemäßen Lösung vorgesehen, dass der die jeweilige Endstellung umfassende Stellungsbereich die Endstellung und einen bis zu dieser Endstellung reichenden Bewegungsbereich umfasst, der im Fall einer translatorischen Bewegung Abweichungen der Kupplungskugel von der Endstellung von bis zu 5 mm und im Fall einer rotatorischen Bewegung Abweichungen von bis zu 10° von der Endstellung umfasst.

Besonders vorteilhaft lässt sich die erfindungsgemäße Lösung jedoch dann einsetzen, wenn das Sensorsystem die Lagen von zwischen der Arbeitsstellung und der Ruhestellung liegenden Zwischenstellungen des Kugelhalses erfasst, so dass auch die Möglichkeit besteht, das Durchlaufen von derartigen Zwischenstellungen, die zwischen der Arbeitsstellung und der Ruhestellung liegen, zu überprüfen.

Besonders optimal ist die erfindungsgemäße Lösung dann konzipiert, wenn das Sensorsystem die Stellungen des Kugelhalses von der Arbeitsstellung bis zur Ruhestellung und umgekehrt erfasst.

Bei der Erfassung der Stellungen wäre es grundsätzlich im Rahmen der erfindungsgemäßen Lösung ausreichend, die einzelnen Stellungen in einem gewissen Stellungsraster und somit nicht kontinuierlich zu erfassen, vorzugsweise ist vorgesehen, dass das Sensorsystem die Stellungen der Kupplungskugel relativ zur Lagerbasis mit einer Ortsauflösung von weniger als 8 mm bei einer translatorischen Bewegung und/oder einer rotatorischen Bewegung erfasst.

Noch vorteilhafter ist es, wenn das Sensorsystem die Stellungen der Kupplungskugel des Kugelhalses relativ zur Lagerbasis mit einer Ortsauflösung erfasst, die im Fall von translatorischen und/oder rotatorischen Bewegungen kleiner als 2 mm ist.

Noch vorteilhafter ist es, wenn die Ortsauflösung im Fall von translatorischen und/oder rotatorischen Bewegungen kleiner als 1 mm ist.

Damit ist unter einer Ortsauflösung von kleiner als 2 mm bei den Bewegungen zu verstehen, dass die Ungenauigkeit bei der Erfassung Abweichungen vom tatsächlichen Wert von maximal 2 mm beinhaltet. Dies entspricht ungefähr einer Ortsauflösung bei rotatorischen Bewegungen von kleiner als 5°, noch besser 2°, wobei der gemessene Wert vom tatsächlichen Wert weniger als 5° beziehungsweise 2° abweicht.

Hinsichtlich der Bestimmung der Stellungsinformationen, die Aussagen darüber liefern, welche der Endstellungen erreicht ist oder welche Zwischenstellung relativ zu den Endstellungen erreicht ist, beispielsweise welche Bewegungsbahn die Kupplungskugel ausgehend von der einen Endstellung bereits durchlaufen hat und welche Bewegungsbahn die Kupplungskugel bis zum Erreichen der anderen Endstellung noch zu durchlaufen hat, ist vorzugsweise vorgesehen, dass das Sensorsystem eine Auswerteeinheit umfasst, welche die von der Sensoreinheit erfassten Stellungen des Kugelhalses mit Referenzstellungen vergleicht und dadurch die Stellungsinformationen ermittelt.

Vorzugsweise werden die Referenzstellungen im Zuge eines Lernvorgangs bestimmt und dann abgespeichert.

Beispielsweise könnten die Stellungsinformationen Informationen über die Bewegungen des Kugelhalsträgers relativ zu den Endstellungen sein.

Besonders günstig ist es jedoch, wenn die Stellungsinformation Informationen über die Bewegungen der Kupplungskugel relativ zu den Endstellungen liefert, da die Kupplungskugel üblicherweise der Teil des Kugelhalses ist, der am weitesten von der Lagerbasis entfernt ist und somit die längsten Bewegungsbahnen zu durchlaufen hat.

Diese Lösung hat dann auch den Vorteil, dass damit beispielsweise visuell der Raumbereich dargestellt werden kann, innerhalb von welchem sich der Kugelhals von der einen Endstellung bis zur anderen Endstellung bewegt, was insbesondere für den Fall von Störungen bei der Bewegung des Kugelhalses zwischen den Endstellungen, insbesondere durch Anschlagen an Fremdobjekte, wie zum Beispiel externe Gegenstände, für eine Bedienungsperson wichtige Informationen vermittelt.

Beispielsweise umfassen in diesem Zusammenhang die Referenzwerte Stellungsinformationen über die Endstellungen und somit ausgehend von den Endstellungen Informationen betreffend den ausgehend von der einen Endstellung durchlaufenen und/oder zum Erreichen der nächsten Endstellung zu durchlaufenden Bewegungspfad und/oder auch Informationen über den ausgehend von der einen Endstellung durchlaufenen und/oder zum Erreichen der nächsten Endstellung zu durchlaufenden Raumbereich für die Bewegung des Kugelhalses.

Somit ist die Auswerteeinheit in der Lage, die die Arbeitsstellung und die Ruhestellung eindeutig anzeigenden Stellungsinformationen zu erzeugen.

Ferner ist die Auswerteeinheit auch in der Lage, die zwischen den Endstellungen liegenden Zwischenstellungen eindeutig anzeigenden Stellungsinformationen zu erzeugen.

Eine besonders vorteilhafte Lösung sieht vor, dass die Anhängekupplung mindestens eine motorische Antriebseinheit für die Ausführung der Bewegung des Kugelhalses und eine mit der Auswerteeinheit zusammenwirkende und die Stellungsinformationen heranziehende Bewegungssteuerung zum Ansteuern der mindestens einen Antriebseinheit umfasst und dass die Bewegungssteuerung unter Berücksichtigung der Stellungsinformationen die Antriebseinheit steuert.

Der Vorteil dieser Lösung ist darin zu sehen, dass einerseits die Möglichkeit besteht, durch die mindestens eine motorische Antriebseinheit die Bewegung motorisch angetrieben auszuführen und dieses motorische Antreiben über die Bewegungssteuerung zu steuern, die aufgrund der von der Auswerteeinheit zur Verfügung gestellten Stellungsinformation in der Lage ist, die einzelnen Stellungen des Kugelhalses zu identifizieren und entsprechend den erreichten Stellungen des Kugelhalses die weitere Bewegung entsprechend der durchgeführten oder durchzuführenden Bewegung zu steuern, so dass dadurch insbesondere die für ein Kraftfahrzeug erforderlichen Sicherheitsanforderungen durch die Bewegungssteuerung selbsttätig durchgeführt werden können.

Beispielsweise sieht die erfindungsgemäße Lösung vor, dass die Bewegungssteuerung einen Bewegungsbetriebsmodus aufweist, in welchem ein Bewegen des Kugelhalses von einer der Endstellungen zur anderen Endstellung erfolgt.

Insbesondere sieht eine derartige Steuerung A vor, dass beispielsweise dann, wenn der Kugelhals an ein Hindernis anschlägt, die Schwenkbewegung unterbrochen wird und der Kugelhals stehen bleibt oder in die Endstellung, von der er ausgehend bewegt wurde, zurückbewegt wird.

Vorzugsweise ist bei einem derartigen Bewegungsbetriebsmodus vorgesehen, dass die Bewegungssteuerung den die Bewegung antreibenden Antriebsmotor der mindestens einen Antriebseinheit bei Erreichen der jeweiligen Endstellung als Abschluss eines Einfahrvorgangs in diese Endstellung abschaltet.

Damit kann eine Überlastung des Antriebsmotors bei Erreichen der Endstellung verhindert werden und andererseits auch die Endstellung präzise angefahren werden, da die Position des Kugelhalses bei Erreichen der Endstellung erfasst werden kann, so dass dabei auch eine Abschaltung des Antriebsmotors vor oder unmittelbar bei dem endgültigen Erreichen der Endstellung ausgeschlossen werden kann.

Der Vorteil dieser Lösung ist darin zu sehen, dass im Gegensatz zu den bisherigen Lösungen, bei denen ein Abschalten des die Bewegung antreibenden Antriebsmotors aufgrund des Motorstroms erfolgt, nunmehr das tatsächliche Erreichen der jeweiligen Endlage festgestellt werden kann.

Dies hat im Gegensatz zur Überwachung des Motorstroms des Antriebsmotors zur Abschaltung zur Folge, dass definitiv das Erreichen der Endlage erkannt werden kann und somit jegliche Störungen, die beispielsweise zu einer Blockierung vor Erreichen der Endstellung führen, nicht zum Abschalten des Antriebsmotors und daher zum Stillsetzen des Kugelhalses in einer nicht der Endstellung entsprechenden Stellung führen können.

Eine weitere vorteilhafte Lösung sieht vor, dass die Bewegungssteuerung im Bewegungsbetriebsmodus im Verlauf des Bewegens des Kugelhalses von der einen Endstellung zur anderen Endstellung die Antriebseinheit so ansteuert, dass diese den Kugelhals mit einem definierten Geschwindigkeitsprofil bewegt.

Dadurch können für eine optimale Bewegung des Kugelhalses vorteilhafte Geschwindigkeitsprofile vorgegeben werden, die beispielsweise die für die Bewegung von der einen Endstellung zur anderen Endstellung erforderliche Zeit optimieren und gegebenenfalls auch die dabei entstehenden Belastungen für die Lagereinheit und den Antriebsmotor optimieren.

Die einfachste Lösung sieht dabei vor, dass das definierte Geschwindigkeitsprofil für die Bewegung des Kugelhalses zwischen den Endstellungen eine Bewegungsphase mit konstanter Geschwindigkeit umfasst, so dass beispielsweise ein Absenken des Kugelhalses und ein Anheben des Kugelhalses nicht zu unterschiedlichen Geschwindigkeiten führen.

Eine andere vorteilhafte Lösung sieht vor, dass alternativ oder ergänzend das Geschwindigkeitsprofil den Endstellungen zugeordnete Beschleunigungs- und Verzögerungsphasen umfasst.

Eine weitere Lösung sieht alternativ oder ergänzend zu den bislang beschriebenen Lösungen vor, dass das Bewegungsprofil für eine Bewegungsphase des Kugelhalses mit einem erhöhten Gefährdungspotential, beispielsweise hinter dem Kraftfahrzeug, für eine Bedienungsperson eine geringere Geschwindigkeit als in Bewegungsphasen ohne Gefährdungspotential, beispielsweise unter dem Kraftfahrzeug, aufweist.

Eine weitere vorteilhafte Ausführungsform der erfindungsgemäßen Lösung sieht vor, dass die Bewegungssteuerung durch Vergleich der Stellungsinformationen des Kugelhalses mit einem Drehbewegungssignal des Antriebsmotors der mindestens einen Antriebseinheit die Bewegung des Kugelhalses und/oder eine Blockierung der Bewegung überwacht.

Der Vorteil dieser Lösung ist darin zu sehen, dass damit eine Korrelation zwischen dem Antriebsmotor und der tatsächlich ausgeführten Bewegung hergestellt werden kann.

Insbesondere ist dabei vorgesehen, dass die Bewegungssteuerung durch Vergleich der Stellungsinformation des Kugelhalses mit dem Drehbewegungssignal des Antriebsmotors eine Bewegungsrelation ermittelt und mit abgespeicherten Referenzwerten für die Bewegungsrelation vergleicht.

Damit besteht die Möglichkeit, in einfacher Weise die Bewegung des Kugelhalses gegen Störungen zu überwachen.

Beispielsweise ist es dabei möglich, dass die Bewegungssteuerung bei einem Abweichen von der ermittelten Bewegungsrelation von der vorgegebenen Bewegungsrelation ein Störungssignal erzeugt.

Dieses Störungssignal wird somit beispielsweise dann erzeugt, wenn die Bewegungssteuerung eine Störung oder Bewegung des Kugelhalses durch externe Einflüsse, beispielsweise eine Kollision mit einem Drittgegenstand oder der Bedienungsperson, feststellt oder auch eine Störung im Bereich der Antriebseinheit für die Bewegung des Kugelhalses zwischen den Endstellungen feststellt.

Im Zusammenhang mit der bisherigen Erläuterung der erfindungsgemäßen Anhängekupplung wurde nicht näher ausgeführt, ob und wie eine Blockierung einer Endstellung des Kugelhalses, insbesondere der Arbeitsstellung und der Ruhestellung, erfolgen soll.

Aus diesem Grund sieht eine besonders vorteilhafte Lösung vor, dass die Anhängekupplung eine Blockiereinrichtung zur Fixierung des Kugelhalses in den Endstellungen umfasst und dass die Blockiereinrichtung durch eine Antriebseinheit von einer Blockierstellung in eine Freigabestellung überführbar ist und dass die mit der Auswerteeinheit zusammenwirkende und die Stellungsinformationen heranziehende Bewegungssteuerung zur Ansteuerung der Antriebseinheit unter Berücksichtigung der Stellungsinformationen vorgesehen ist.

Somit besteht mit der erfindungsgemäßen Bewegungssteuerung auch gleichzeitig die Möglichkeit, die Antriebseinheit für die Blockiereinrichtung anzusteuern, um diese zwischen ihrer Blockierstellung, in welcher eine Fixierung des Kugelhalses in der jeweiligen Endstellung erfolgt, in eine Freigabestellung zu überführen, in welcher eine Bewegung des Kugelhalses zum Erreichen der jeweils anderen Endstellung erfolgen kann.

Diese Bewegung des Kugelhalses kann dabei eine translatorische und/oder rotatorische Bewegung sein.

Vorzugsweise ist bei einem Ausführungsbeispiel der erfindungsgemäßen Lösung vorgesehen, dass ein Verlassen der Fixierstellung der Blockiereinrichtung durch eine translatorische Bewegung erfolgt und nachfolgend über eine rotatorische Bewegung wiederum eine Stellung erreicht wird, aus welcher durch eine translatorische Bewegung wieder die Fixierstellung der Blockiereinrichtung erreicht wird, wobei in der Fixierstellung wieder ein Übergang in die Blockierstellung der Blockiereinrichtung erfolgt, die insbesondere dann vorliegt, wenn durch eine Verriegelungseinheit die Fixierstellung aufrechterhalten wird.

Besonders günstig ist es, wenn die Bewegungssteuerung in einem Bewegungsbetriebsmodus die Antriebseinheit so ansteuert, dass diese die Blockiereinrichtung zu Beginn der Bewegung von der Blockierstellung in die Freigabestellung überführt.

Vorzugsweise ist ferner vorgesehen, dass die Bewegungssteuerung in einem Bewegungsbetriebsmodus die Antriebseinheit so ansteuert, dass die Blockiereinrichtung spätestens bei Erreichen der nächstfolgenden Endstellung in die Blockierstellung übergeht.

Dies ist beispielsweise dadurch realisierbar, dass die Bewegungssteuerung in dem Schwenkbetriebsmodus bei Erreichen der nächstfolgenden Endstellung durch Ansteuern der Antriebseinheit die Blockiereinrichtung in die Blockierstellung bewegt.

Alternativ dazu ist vorgesehen, dass die Bewegungssteuerung in dem Bewegungsbetriebsmodus während der Bewegung des Kugelhalses zwischen den Endstellungen die Blockiereinrichtung in eine Blockierbereitschaftsstellung bewegt, aus welcher die Blockiereinrichtung selbsttätig, beispielsweise unter Einwirkung eines federelastischen Kraftspeichers, in die Blockierstellung übergeht.

Das heißt, dass mittels der Bewegungssteuerung die Möglichkeit besteht, zu erkennen, dass sich der Kugelhals noch in einer Zwischenstellung vor Erreichen der jeweiligen Endstellung bewegt und in dieser Zwischenstellung bereits die Blockiereinrichtung in die Blockierbereitschaftsstellung zu überführen, beispielsweise möglichst kurz vor Erreichen der Endstellung, so dass dann bei Erreichen der Endstellung die Blockiereinrichtung selbsttätig in die Blockierstellung übergehen kann.

Gleichzeitig kann die Bewegungssteuerung insbesondere erkennen, inwieweit sich der Kugelhals durch eine translatorische Bewegung nach Beendigung der Schwenkbewegung in die jeweilige Endstellung bewegt hat, in welcher dieser durch die Fixiereinheit fixiert wird, wobei dies beispielsweise eine translatorische Bewegung ist, die durch das Sensorsystem erfasst wird.

Hinsichtlich der Ausbildung des Sensorsystems wurden im Zusammenhang mit den bisherigen Erläuterungen der einzelnen Ausführungsbeispiele keine detaillierten Angaben gemacht.

Insbesondere sind der erste Sensor und gegebenenfalls der zweite Sensor als ihre Ausrichtungen und/oder Bewegungen im Raum erfassende Sensoren ausgebildet, die insbesondere keine an der Anhängekupplung vorzusehende Referenz für die Erfassung der Ausrichtungen und/oder Bewegungen im Raum benötigen.

Die Verwendung derartiger Sensoren hat den Vorteil, dass sich damit in einfacher Weise komplexe Bewegungen, wie insbesondere mehrachsige rotatorische und/oder translatorische gleichzeitig erfolgende und/oder aufeinander folgende Bewegungen in einfacher Weise erfassen lassen.

Derartige Sensoren könnten beispielsweise sich am Erdmagnetfeld orientierende Sensoren sein.

Insbesondere ist hierbei vorgesehen, dass der erste Sensor und der zweite Sensor Neigungssensoren sind.

Mit derartigen Neigungssensoren besteht in einfacher Weise die Möglichkeit, komplexe Bewegungen des Kugelhalses auf seinem Weg von der Arbeitsstellung in die Ruhestellung und umgekehrt zu erfassen.

Insbesondere wenn der erste Sensor und der zweite Sensor Neigungssensoren sind, ist es vorteilhaft, Differenzwerte zwischen diesen Sensoren zu bilden, da damit Neigungen der Lagereinheit, insbesondere der Lagerbasis, die sich störend auf die Erfassung der Neigung des Kugelhalses auswirken, als Korrektur berücksichtigt werden können.

Somit besteht die Möglichkeit, eine relative Neigung des Kugelhalses zur Lagerbasis mit hoher Präzision zu erfassen.

Insbesondere ist dabei vorgesehen, dass der erste Sensor und der zweite Sensor als als Neigungssensoren betreibbare, Bewegungen im Raum detektierende Sensoren, beispielsweise Beschleunigungssensoren ausgebildet sind, so dass der erste Sensor und der zweite Sensor nicht nur die Neigungen sondern Neigungen und/oder Beschleunigungen zu erfassen, wodurch die Detektierung der Bewegungen im Raum zusätzlich verbessert werden kann.

Insbesondere ist dabei vorgesehen, dass der erste und/oder der zweite Sensor Neigungen um mindestens eine Neigungsachse, also eine rotatorische Achse, erfassen.

Vorzugsweise sind derartige, als Beschleunigungssensoren ausgebildete Neigungssensoren so aufgebaut, dass sie in der Lage sind, Neigungswerte in Bezug auf eine Schwerkraftrichtung zu erfassen, so dass die Schwerkraftrichtung die Referenzrichtung für die Erfassung der Neigungswerte darstellt und somit sowohl beim ersten Sensor als auch beim zweiten Sensor eine identische Referenz durch die Schwerkraftrichtung gegeben ist.

Vorzugsweise ist die Auswerteeinheit so ausgebildet, dass diese zur Bestimmung der Stellungsinformation des Kugelhalses Neigungsdifferenzwerte erfasst, die aus Neigungswerten als Messwerte der Sensoren gebildet sind.

Um außerdem exakte Bezugswerte zu erhalten, ist vorzugsweise vorgesehen, dass die Auswerteeinheit in mindestens einer der Endstellungen eine Neigungsdifferenz zwischen einer Neigung des ersten Sensors und einer Neigung des zweiten Sensors erfasst.

Basierend auf der Erfassung der Neigungsdifferenz in einer der Endstellungen besteht somit im einfachsten Fall die Möglichkeit, den Neigungswert des zweiten Sensors als Konstante zu belassen und bei der Bewegung des Kugelhalses lediglich die Differenz der Neigungswerte des ersten Sensors und des als konstant angenommenen Neigungswerts des zweiten Sensors zu bilden.

Um die Bewegung des Kugelhalses möglichst exakt nachvollziehen zu können, ist vorzugsweise vorgesehen, dass zur Bestimmung der Stellungsinformation des Kugelhalses basierend auf der ermittelnden Neigungsdifferenz der Verlauf der Neigungswerte des ersten Sensors bei einer Bewegung von einer Endstellung zur anderen Endstellung ermittelt wird.

Insbesondere sind durch die Erfassung der Neigungswerte mindestens des ersten Sensors mindestens rotatorische Bewegungen des Kugelhalses relativ zur Lagerbasis um mindestens eine Schwenkachse in einfacher Weise zu erfassen.

Besonders günstig für die Erfassung von Neigungen des Kugelhalses ist es, wenn bei dem ersten Sensor seine für die Neigungserfassung relevante Z-Achse und eine weitere Achse seines kartesischen Koordinatensystems parallel zur Schwenkebene ausgerichtet sind, so dass in einfacher Weise Bewegungen um die Schwenkachse als Neigungsachse beim ersten Sensor erfasst werden können.

Um die Differenzbildung zwischen den Neigungswerten des ersten Sensors und des zweiten Sensors zu vereinfachen ist es ferner günstig, wenn bei dem zweiten Sensor seine für die Neigungserfassung relevante Z-Achse und eine weitere Achse seines kartesischen Koordinatensystems parallel zur Schwenkebene ausgerichtet sind, so dass sich in einfacher Weise die Differenzbildung zwischen den Neigungswerten des ersten Sensors und des zweiten Sensors ohne Umrechnung realisieren lässt.

Darüber hinaus sieht eine vorteilhafte Lösung vor, dass die Auswerteeinheit mit mindestens einem der Sensoren, insbesondere dem ersten Sensor Beschleunigungen erfasst.

Die Erfassung der Beschleunigungen kann einerseits dazu dienen, die Neigungswerte noch präziser zu erfassen, da bei auftretenden Neigungen ebenfalls Beschleunigungen auftreten.

Alternativ oder ergänzend dazu erlaubt insbesondere die Erfassung von Beschleunigungen auch die Erfassung translatorischer Bewegungen des Kugelhalses, so dass dadurch auch in einfacher Weise translatorische Bewegungen des Kugelhalses ergänzend oder alternativ zu rotatorischen Bewegungen erfasst werden können.

Besonders günstig ist es, wenn die Auswerteeinheit mit beiden Sensoren Beschleunigungen erfasst, da damit Störgrößen, insbesondere im Bereich der Lagerbasis auftretende Beschleunigungen, die die Erfassung der lediglich beim Kugelhals auftretenden Beschleunigungen stören, eliminiert werden können.

Insbesondere ist es somit möglich, dass die Auswerteeinheit eine Beschleunigungsdifferenz zwischen dem ersten Sensor und dem zweiten Sensor erfasst und durch Bestimmung von Differenzwerten und insbesondere mit einem Vergleich mit Referenzwerten rotatorische und/oder translatorische Bewegungen erfasst.

Dabei erfolgt die Bestimmung der Referenzwerte im Zuge eines Lernvorgangs und nachfolgend werden diese Referenzwerte abgespeichert.

Das Erfassen von translatorischen Bewegungen mittels der Auswerteeinheit kann beispielsweise über ein Erfassen einzelner Beschleunigungswerte über einer Zeitachse verbunden mit einer zeitlichen Verlaufsanalyse, bei welcher eine Auswertung der über der Zeitachse ermittelten Beschleunigungswerte verbunden mit der Auswertung der Zeitabständen derselben erfolgen.

Ein besonders vorteilhaftes Erfassen der translatorischen Bewegung sieht eine Verlaufsmusteranalyse der über der Zeitachse erfassten Beschleunigungswerte vor, da aufgrund der bewegbaren Lagerung des Kugelhalsträgers die mechanischen Bewegungsmöglichkeiten vorgegeben sind und somit im störungsfreien Betrieb mindestens ähnliche, wenn nicht identische Verlaufsmuster der Beschleunigungswerte auftreten, so dass ein Vergleich des erfassten Verlaufsmusters mit einem abgespeicherten Verlaufsmuster bereits eine Aussage über einen störungsfreien oder einen gestörten Betrieb zulässt.

Besonders günstig ist es ferner, wenn der Bewegungssteuerung eine Visualisierungseinheit zur Anzeige von Betriebsmodi und/oder Betriebszuständen und/oder Störungen zugeordnet ist, so dass dann eine Bedienungsperson die unterschiedlichen Modi und Zustände einfach erkennen kann.

Die Erfindung eignet sich insbesondere für eine Anhängekupplung umfassend eine fest mit einer Fahrzeugkarosserie verbindbare Halteeinheit, eine an der Halteeinheit vorgesehene Lagereinheit mit einer mit der Halteeinheit fest verbundenen Lagerbasis und mit einem relativ zur Lagerbasis um eine Schwenkachse zwischen einer Arbeitsstellung und einer Ruhestellung verschwenkbaren sowie in Richtung der Schwenkachse zwischen einer Fixierstellung und einer Schwenkstellung verschiebbaren Kugelhalsträger, einen mit einem Ende an dem Kugelhalsträger gehaltenen Kugelhals, welcher an einem anderen Ende eine Kupplungskugel trägt und welcher durch die Verschwenkbarkeit des Kugelhalsträgers um die Schwenkachse zwischen der Arbeitsstellung und der Ruhestellung verschwenkbar ist und durch die Verschiebbarkeit des Kugelhalsträgers zwischen der Fixierstellung und der Schwenkstellung verschiebbar ist, eine Fixiereinheit, welche in der Fixierstellung des Kugelhalsträgers den Kugelhalsträger und somit auch den Kugelhals mit Formschlusselementen relativ zur Lagerbasis drehfest fixiert und in der Schwenkstellung ein Verschwenken desselben zulässt, und eine axial gegen eine Verschiebung in Richtung der Schwenkachse wirkende Verriegelungseinheit, mit welcher die Fixiereinheit in der Fixierstellung gegen eine Bewegung in Richtung der Schwenkstellung festlegbar ist, wobei die Fixiereinheit ein mit der Lagerbasis fest verbundenes feststehendes erstes Formschlusssegment aufweist, mit welchem ein mit dem Kugelhalsträger drehfest verbundenes und mit diesem mitschwenkendes erstes Formschlusssegment in der Arbeitsstellung durch Verschieben des Kugelhalsträgers von der Schwenkstellung in die Fixierstellung in Eingriff bringbar ist und durch Verschieben von der Fixierstellung in die Schwenkstellung außer Eingriff bringbar ist.

Der Vorteil dieser Lösung ist darin zu sehen, dass mit dieser eine einfache stabile, realisierbare und insbesondere raumsparend bauende Lösung zur Fixierung des Kugelhalsträgers relativ zur Lagerbasis besteht.

Unter einem Formschlusssegment im Sinne der erfindungsgemäßen Lösung ist ein Segment eines um die Schwenkachse umlaufenden Formschlusselements zu verstehen.

Um auch in der Ruhestellung eine Fixierung des Kugelhalsträgers realisieren zu können, ist vorzugsweise vorgesehen, dass die Fixiereinheit ein mit der Lagerbasis fest oder mit dem Kugelhalsträger drehfest verbundenes weiteres erstes Formschlusssegment aufweist, mit welchem das mit dem Kugelhalsträger drehfest verbundene und mit diesem mitschwenkende bzw. das mit der Lagerbasis fest verbundene erste Formschlusssegment in der Ruhestellung durch Verschieben des Kugelhalsträgers von der Schwenkstellung in die Fixierstellung in Eingriff bringbar ist und durch Verschieben von der Fixierstellung in die Schwenkstellung außer Eingriff bringbar ist.

Der Vorteil dieser Lösung ist darin zu sehen, dass damit auch in der Ruhestellung eine einfache Möglichkeit der Fixierung des Kugelhalsträgers relativ zur Lagerbasis gegeben ist.

Um die Fixierung des Kugelhalsträgers relativ zur Lagerbasis mittels der Fixiereinheit noch zu verbessern, ist vorzugsweise vorgesehen, dass die Fixiereinheit ein mit der Lagerbasis fest verbundenes feststehendes zweites Formschlusssegment aufweist, mit welchem ein mit dem Kugelhalsträger drehfest verbundenes und mit dem Kugelhalsträger mitschwenkendes zweites Formschlusssegment in der Arbeitsstellung durch Verschieben des Kugelhalsträgers von der Schwenkstellung in die Fixierstellung in Eingriff bringbar und durch Verschieben des Kugelhalsträgers von der Fixierstellung in die Schwenkstellung außer Eingriff bringbar ist.

Der Vorteil dieser Lösung ist darin zu sehen, dass auch das zweite Formschlusssegment somit zur Fixierung des Kugelhalsträgers relativ zur Lagerbasis beitragen kann.

Um auch in der Ruhestellung eine Fixierung des Kugelhalsträgers relativ zur Lagerbasis durch mehrere zusammenwirkende Zahnsegmente zu erreichen, ist vorzugsweise vorgesehen, dass die Fixiereinheit ein mit der Lagerbasis fest oder mit dem Kugelhalsträger drehfest verbundenes weiteres zweites Formschlusssegment aufweist, mit welchem das mit dem Kugelhalsträger drehfest verbundene und mit dem Kugelhalsträger mitschwenkende bzw. das mit der Lagerbasis fest verbundene zweite Formschlusssegment in der Ruhestellung durch Verschieben des Kugelhalsträgers von der Schwenkstellung in die Fixierstellung in Eingriff bringbar und durch Verschieben des Kugelhalsträgers von der Fixierstellung in die Schwenkstellung außer Eingriff bringbar ist.

Der Vorteil auch dieser Lösung ist darin zu sehen, dass auch somit in der Ruhestellung die Möglichkeit besteht, den Kugelhalsträger relativ zur Lagerbasis bezüglich der Schwenkachse durch Formschlusssegmente zu fixieren.

Alternativ oder ergänzend zu der bisher beschriebenen für die Erfindung geeigneten Anhängekupplung sieht eine weitere Lösung einer Anhängekupplung vor, dass die axial wirkende Verriegelungseinheit einen in Richtung der Schwenkachse unverschieblich mit dem Kugelhalsträger verbundenen und mit dem Kugelhalsträger in Richtung der Schwenkachse bewegbaren zentralen Aufnahmeträger mit mindestens einer bezogen auf die Schwenkachse radial außenliegenden Verriegelungsaufnahme aufweist, dass die Verriegelungseinheit mindestens ein in einem Raum um den Aufnahmeträger angeordnetes Verriegelungselement aufweist, welches in eine auf die Verriegelungsaufnahme zum Halten derselben in der Fixierstellung einwirkende Verriegelungsstellung bringbar ist, dass die Verriegelungseinheit einen mit der Lagerbasis verbundenen Führungsträger mit mindestens einer Führung für das mindestens eine Verriegelungselement aufweist, wobei die Führung dem mindestens einen Verriegelungselement eine Bewegungsrichtung für eine Bewegung zwischen der Verriegelungsstellung und einer Lösestellung vorgibt, dass die Verriegelungseinheit ein Betätigungselement aufweist, welches von einer dem Aufnahmeträger gegenüberliegenden Seite auf das mindestens eine Verriegelungselement einwirkt, und dass mit dem Betätigungselement eine Bewegung des Verriegelungselements von der Lösestellung in die Verriegelungsstellung erzeugbar oder eine Bewegung des Verriegelungselements von der Verriegelungsstellung in die Lösestellung freigebbar ist.

Der Vorteil dieser Lösung ist darin zu sehen, dass durch das Vorsehen des zentralen Aufnahmeträgers eine einfache konstruktive Lösung geschaffen ist, mit welcher das Kugelhalsträger in der Fixierstellung fixierbar ist, wobei die erfindungsgemäße Lösung mit dem zentralen Aufnahmeträger den Vorteil hat, dass sie einen sehr kleinen Bauraum benötigt.

Der Aufnahmeträger kann dabei so ausgebildet sein, dass das Verriegelungselement mit der Verriegelungsaufnahme nur in der Verriegelungsstellung oder kurz vor Erreichen derselben wechselwirkt.

Eine vorteilhafte Lösung sieht vor, dass die Verriegelungsaufnahme mit einer Einzugsfläche versehen ist, auf die das Verriegelungselement vor Erreichen der Verriegelungsstellung zum Einziehen des Aufnahmeträgers und somit des Kugelhalsträgers in die Fixierstellung einwirken kann.

Besonders günstig ist es, wenn die Einzugsfläche sich so weit erstreckt, dass das Verriegelungselement auf diese in der Lösestellung einwirken kann, und zwar dann, wenn in der Lösestellung eine Beaufschlagung derselben in Richtung der Verriegelungsstellung erfolgt, so dass mit dem Verriegelungselement ein Einziehen des Aufnahmeträgers in die Fixierstellung bereits von der Schwenkstellung ausgehend möglich ist und es auch möglich ist, bereits in der Schwenkstellung eine Einzugskraft auf den Aufnahmeträger wirken zu lassen.

Zur stabilen Verriegelung ist vorzugsweise vorgesehen, dass der zentrale Aufnahmeträger mindestens zwei Verriegelungsaufnahmen aufweist, dass in dem Raum um den zentralen Aufnahmeträger mindestens zwei Verriegelungselemente angeordnet sind und dass der Führungsträger mindestens zwei Führungen für die mindestens zwei Verriegelungselemente aufweist.

Damit besteht die Möglichkeit, den Aufnahmeträger durch bezüglich der Schwenkachse rotationssymmetrisch wirkende oder im Wesentlichen rotationssymmetrisch wirkende Kräfte zu mit den Verriegelungselementen zu beaufschlagen.

Beispielsweise besteht die Möglichkeit bei zwei Verriegelungselementen diese einander gegenüberliegend anzuordnen oder bei drei Verriegelungselementen diese im Winkelabstand von 120° relativ zueinander anzuordnen.

Insbesondere ist es vorteilhaft, wenn die von den Verriegelungselementen auf den Aufnahmeträger wirkenden Kräfte sich im Wesentlichen oder vollständig gegenseitig aufheben, so dass dadurch in einfacher Weise der Aufnahmeträger selbst bei Beaufschlagung durch die Verriegelungselemente zentriert zur Schwenkachse gehalten ist.

Hinsichtlich des Betätigungselements wurden bislang keine näheren Angaben gemacht.

So wäre es beispielsweise denkbar, das Betätigungselement für eines oder für mehrere Verriegelungselemente so anzuordnen, dass dieses in radialer Richtung zur Schwenkachse bewegbar ist oder so anzuordnen, dass dieses in Richtung parallel zur Schwenkachse bewegbar ist.

Besonders vorteilhaft ist es jedoch, insbesondere um einen kleinen Bauraum zu erreichen, wenn das Betätigungselement um die Schwenkachse drehbar ist und mindestens eine Betätigungsflächenfolge aufweist, die einen maximal radial außenliegenden und einen maximal radial innenliegenden Flächenbereich umfasst und wenn das mindestens eine Verriegelungselement beim Anliegen an dem radial maximal außenliegenden Flächenbereich in seiner Lösestellung steht und beim Anliegen an dem radial maximal innenliegenden Flächenbereich in seiner Verriegelungsstellung steht.

Im Falle von mindestens zwei Verriegelungselementen ist vorzugsweise vorgesehen, dass das Betätigungselement den Aufnahmeträger und die mindestens zwei Verriegelungselemente radial außenliegend umgibt.

Insbesondere sieht eine vorteilhafte Lösung vor, dass das Betätigungselement einen ringförmigen Betätigungsflächenträger aufweist, an welchem die mindestens eine Betätigungsflächenfolge angeordnet ist.

Prinzipiell wäre es denkbar, das Betätigungselement aktiv, beispielsweise mit einem Antrieb zu bewegen.

Um eine manuell betätigbare, jedoch sichere Positionierung des Betätigungselements zu erreichen, ist vorzugsweise vorgesehen, dass das Betätigungselement durch einen Federkraftspeicher ständig in Richtung seiner Verriegelungsstellung beaufschlagt ist. Dies hat insbesondere den Vorteil, dass die Verriegelungseinheit bei Nichtbetätigung selbsttätig von jeder Stellung in die Verriegelungsstellung, insbesondere eine Spannstellung derselben übergeht.

Diese Lösung hat den Vorteil, dass eine Bewegung des Betätigungselements in Richtung der Lösestellung gegen die Wirkung des Federkraftspeichers zu erfolgen hat und somit bei nicht erfolgender Betätigung des Betätigungselements dieses stets selbsttätig in die Verriegelungsstellung übergeht und somit die Verriegelungselemente in die Verriegelungsaufnahmen bewegt, so dass das System selbsttätig stets in einen sicheren, nämlich verriegelten Zustand übergeht, sofern der Kugelhalsträger die Fixierstellung erreicht.

Um sicherzustellen, dass die Verriegelungseinheit nicht nur den Kugelhalsträger in der Fixierstellung sicher verriegelt, sondern auch den Kugelhalsträger veranlasst, von der Fixierstellung in die Schwenkstellung überzugehen, wenn die Verriegelungseinheit in ihrer Lösestellung steht, ist vorzugsweise vorgesehen, dass die axial wirkende Verriegelungseinheit eine axial in Richtung der Schwenkstellung wirkende Ausschiebeeinheit aufweist.

Eine derartige Ausschiebeeinheit kann in unterschiedlichster Art und Weise ausgebildet sein.

Vorzugsweise umfasst die Ausschiebeeinheit ein in Richtung der Schwenkachse wirkendes Ausschiebeelement, mit welchem der Kugelhalsträger von der Fixierstellung in die Schwenkstellung verschiebbar ist.

Ein derartiges Ausschiebeelement ist beispielsweise derart realisiert, dass dieses, beispielsweise mittels einer Schrägfläche auf ein mit dem Kugelhalsträger gekoppeltes Druckaufnahmeelement wirkt.

Insbesondere ist vorgesehen, dass das Ausschiebeelement mit dem Druckaufnahmeelement dann den Kugelhalsträger von der Fixierstellung in die Schwenkstellung bewegt, wenn das mindestens eine Verriegelungselement seine Lösestellung erreichen kann, das heißt, dass dann insbesondere das Betätigungselement in seiner Lösestellung steht.

Hinsichtlich der Festlegung der Bewegungen des Verriegelungselements wurde erläutert, dass diese durch die Führung des Führungsträgers erfolgen soll.

Bezüglich der Abstützung des Verriegelungselements insbesondere in der Verriegelungsstellung wurden bislang keine näheren Aussagen gemacht.

So sieht eine vorteilhafte Lösung vor, dass sich das Verriegelungselement in der Verriegelungsstellung an der Führung abstützt und somit unter Abstützung an der Führung in die Verriegelungsaufnahme eindrückbar ist, um somit in der Verriegelungsstellung den Aufnahmeträger relativ zum Führungsträger mittels des Verriegelungselements verspannen zu können, so dass durch das in seine Verriegelungsstellung seitens des Betätigungselements beaufschlagte Verriegelungselement eine Verspannung des Aufnahmeträgers relativ zum Führungsträger erfolgen kann.

Hinsichtlich der Ausbildung der Führungen am Führungsträger wurden bislang keine näheren Angaben gemacht.

Prinzipiell wäre es denkbar, die Führung so auszubilden, dass sie durch eine Bohrung oder einen geschlossenen Kanal in dem Führungsträger realisiert ist.

Eine besonders vorteilhafte und insbesondere hinsichtlich der Herstellung und des Zusammenbaus vereinfachte Lösung sieht vor, dass die mindestens eine Führung durch eine Vertiefung in dem Führungsträger gebildet ist.

Eine derartige Vertiefung ist beispielsweise nutähnlich ausgebildet und weist einander gegenüberliegende Seitenwände sowie einen Vertiefungsgrund auf, die das Verriegelungselement vorzugsweise in der vorgesehenen Bewegungsrichtung führen.

Dabei ist die Vertiefung so ausgebildet, dass sich das Verriegelungselement in seiner in die Verriegelungsaufnahme eingreifenden Verriegelungsstellung an einem Grund der Vertiefung abstützt und somit in der Verriegelungsstellung sich einerseits am Grund der Vertiefung anliegt, andererseits in der Verriegelungsaufnahme anliegt und darüber hinaus noch durch das Betätigungselement in Richtung der Verriegelungsstellung beaufschlagt ist.

Damit besteht die Möglichkeit, den Aufnahmeträger relativ zu dem Führungsträger durch Eindrücken des Verriegelungselements in die Verriegelungsaufnahme bei Abstützung desselben an dem Grund der Vertiefung zu verspannen.

Besonders vorteilhaft ist es für die Herstellung der Vertiefung und dem Zusammenbau der Lagereinheit, wenn die Vertiefung auf einer dem Führungsträger abgewandten Seite offen ist.

Hinsichtlich der Ausbildung des Führungsträgers und der Fixiereinheit und der Verbindung derselben miteinander wurden bislang keine näheren Angaben gemacht.

So sieht eine vorteilhafte Lösung vor, dass der Führungsträger und ein feststehender Formschlusselemententräger der Fixiereinheit miteinander verbunden sind.

Darüber hinaus sieht alternativ oder ergänzend zu den bislang beschriebenen Lösungen eine weitere vorteilhafte Lösung vor, dass der Kugelhalsträger einen zentralen Schwenklagerkörper aufweist, der in einer diesen radial außen umschließenden Schwenklagerkörperaufnahme der Lagerbasis um die Schwenkachse schwenkbar und in Richtung der Schwenkachse zwischen der Schwenkstellung und der Fixierstellung verschiebbar gelagert ist.

Das Vorsehen eines derartigen zentralen Schwenklagerkörpers zur schwenkbaren Lagerung des Kugelhalsträgers hat ebenfalls den Vorteil, dass damit eine sehr kleine und raumsparende Bauweise der Lagereinheit möglich wird, da der Schwenklagerkörper seinerseits selbst frei von zusätzlichen in diesen eingebauten Elementen realisiert werden kann.

Beispielsweise lässt sich bei einer derartigen Ausbildung der Lagereinheit vorsehen, dass der Schwenklagerkörper einen mindestens eine Verriegelungsaufnahme aufweisenden zentralen Aufnahmeträger der axial wirkenden Verriegelungseinheit trägt, welcher mit dem Schwenklagerkörper in Richtung der Schwenkachse unverschieblich verbunden ist.

In diesem Fall lässt sich die Verriegelungseinheit vorzugsweise so realisieren, dass in einem Raum um den Aufnahmeträger herum mindestens ein Verriegelungselement der axial wirkenden Verriegelungseinheit angeordnet ist, das in einer Führung eines an der Lagerbasis abgestützten Führungsträgers geführt ist und durch ein auf einer dem Aufnahmeträger abgewandten Seite des Verriegelungselements angeordnetes Betätigungselement mit der mindestens einen Verriegelungsaufnahme in Eingriff oder außer Eingriff bringbar ist.

Eine derartige Lösung ist besonders kompakt und erlaubt in einfacher Weise die Integration der Verriegelungseinheit in die Lagereinheit.

Vorzugsweise sind in diesem Fall der Schwenklagerkörper und der Aufnahmeträger fest miteinander verbunden.

Hinsichtlich der Betätigung der erfindungsgemäßen Anhängekupplung wurden bislang keine näheren Angaben gemacht.

Beispielsweise ist es denkbar, die Verriegelungseinheit manuell zu betätigen, wobei insbesondere eine manuelle Einwirkung auf das Drehmitnahmeelement erfolgt.

Eine vorteilhafte Lösung sieht vor, dass die Verriegelungseinheit durch einen Betätigungsmotor betätigbar ist.

Eine derartige Betätigung durch einen Betätigungsmotor erfolgt jedoch nur in dem Sinne, dass ein Überführen der Verriegelungseinheit in die Lösestellung erfolgt und dann mit dem Betätigungsmotor wiederum die Betätigung eingestellt wird, so dass die Verriegelungseinheit selbsttätig wiederum von der Lösestellung in die Verriegelungsstellung, insbesondere in die Spannstellung übergeht.

Hierzu ist die Verriegelungseinheit mit einem separaten Kraftspeicher, insbesondere einem Federkraftspeicher versehen, welcher zum Übergang von der Lösestellung in die Verriegelungsstellung eine Kraft erzeugt und gegen diesen Kraftspeicher wirkt dann auch der Betätigungsmotor beim Übergang von der Verriegelungsstellung in die Lösestellung.

Mit einer derartigen Lösung besteht die Möglichkeit, eine elektrisch betätigbare Anhängekupplung zur Verfügung zu stellen, wobei beispielsweise das Verschwenken des Kugelhalses auch manuell erfolgen kann.

Ergänzend zum motorischen Betätigen der erfindungsgemäßen Anhängekupplung ist vorgesehen, dass der Kugelhalsträger durch einen Schwenkmotor zwischen der Antriebsstellung und der Arbeitsstellung verschwenkbar ist, so dass hier kein manuelles Verschwenken mehr erfolgen muss, sondern dieses Verschwenken durch den Schwenkmotor erfolgt, der seinerseits jedoch nur für die Verschwenkbewegung erforderlich ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise in einem Heckbereich aufgeschnittene Seitenansicht eines Kraftfahrzeugs mit einer erfindungsgemäßen Anhängekupplung;
- Fig. 2: eine perspektivische Darstellung einer erfindungsgemäßen Anhängekupplung, umfassend eine Halteeinheit, eine Lagereinheit und einen mit der Lagereinheit schwenkbar mit der Halteeinheit verbundenen Kugelhals;
- Fig. 3: eine vergrößerte Ansicht der erfindungsgemäßen Anhängekupplung in Richtung des Pfeils A in Fig. 2 in einer Arbeitsstellung und
- Fig. 4: eine Ansicht entsprechend Fig. 3 in einer Ruhestellung;
- Fig. 5: eine Draufsicht auf die erfindungsgemäße Anhängekupplung in Richtung des Pfeils B in Fig. 2;
- Fig. 6: einen Schnitt längs Linie 6-6 in Fig. 5 durch die Lagereinheit in ihrer Fixierstellung;
- Fig. 7: einen Schnitt längs Linie 6-6 in Fig. 5 durch die Lagereinheit in ihrer Schwenkstellung;
- Fig. 8: einen Schnitt längs Linie 8-8 in Fig. 7;
- Fig. 9: einen Schnitt längs Linie 9-9 in Fig. 7;
- Fig. 10: einen Schnitt längs Linie 10-10 in Fig. 5 in der Schwenkstellung;
- Fig. 11: einen Schnitt ähnlich Fig. 10 in der Fixierstellung;

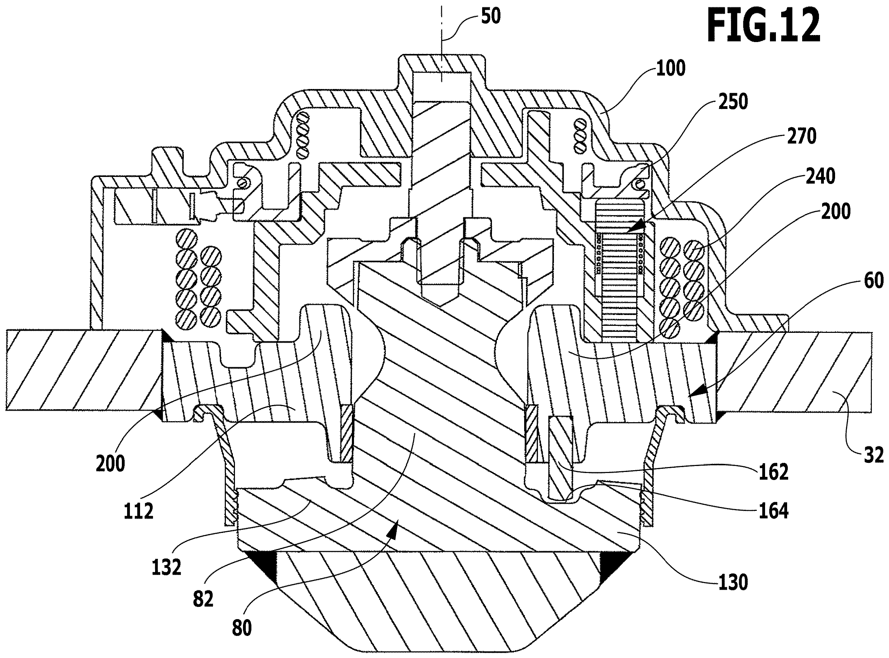

- Fig. 12: einen Schnitt in einer durch die Schwenkachse und durch ein Sicherungselement verlaufenden Schnittebene;
- Fig. 13: einen Schnitt längs Linie 13-13 in Fig. 6;
- Fig. 14: einen Schnitt längs Linie 14-14 in Fig. 7;
- Fig. 15: einen Schnitt längs Linie 15-15 in einer Ausgangsstellung eines Drehmitnahmeelements und einer Verriegelungsstellung eines Betätigungselements;
- Fig. 16: einen Schnitt ähnlich Fig. 15 in einer Mitnahmestellung des Drehmitnahmeelements und des Betätigungselements bei einem Übergang von der Verriegelungsstellung in eine Lösestellung;

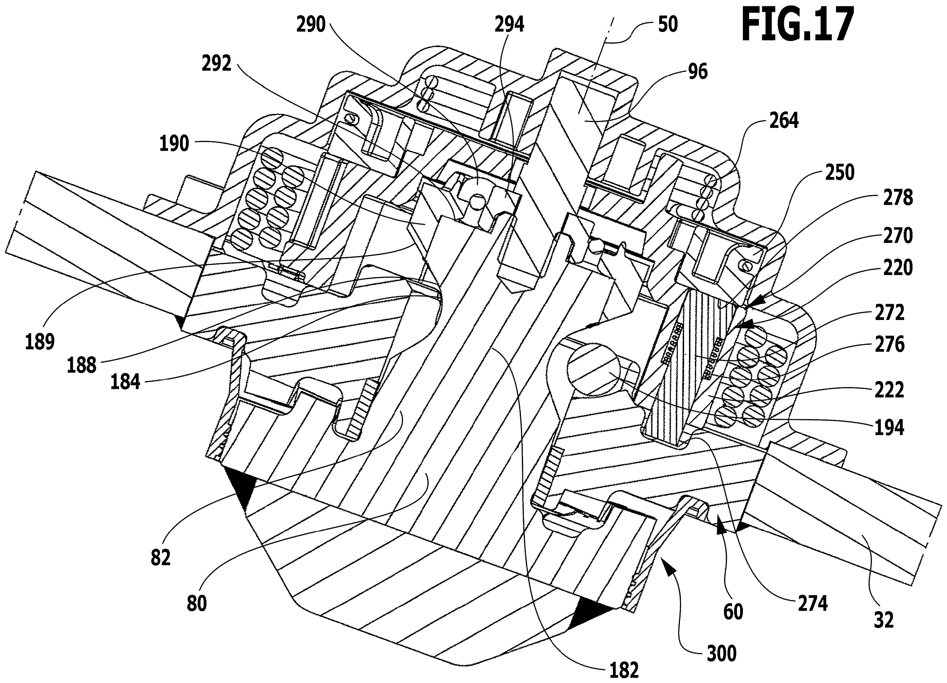

- Fig. 17: einen Schnitt in einer durch die Schwenkachse hindurchverlaufenden und durch ein Sicherungselement mittig hindurchverlaufenden Schnittebene;
- Fig. 18: einen Schnitt entsprechend Fig. 7 mit teilweise weggebrochenen innerem Lagerabschnitt;
- Fig. 19: eine perspektivische Ansicht eines zweiten Ausführungsbeispiels einer erfindungsgemäßen Anhängekupplung und
- Fig. 20: einen Schnitt längs Linie 20-20 in Fig. 19;
- Fig. 21: eine schematische Darstellung der Ausrichtung der Sensoren des Sensorsystems;
- Fig. 22: eine schematische Darstellung des Sensorsystems mit einer Bewegungssteuerung und einer Ablaufsteuerung und
- Fig. 23: eine schematische Darstellung einer Verlaufsmusteranalyse zur Erfassung einer translatorischen Bewegung.

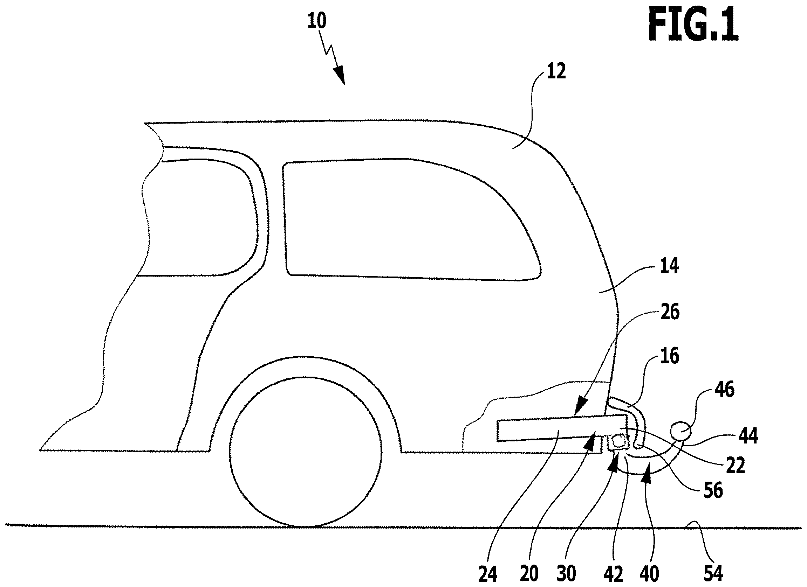

Ein in Fig. 1 dargestelltes, als Ganzes mit 10 bezeichnetes Kraftfahrzeug umfasst eine Fahrzeugkarosserie 12, an welcher an einem Heckbereich 14 eine erfindungsgemäße Anhängekupplung 20 montiert ist, welche einen von einer Stoßfängereinheit 16 abgedeckten und sich quer zu einer Längsrichtung der Fahrzeugkarosserie 12 und quer zum Heckbereich 14 erstreckenden Querträger 22 sowie sich in Längsrichtung der Fahrzeugkarosserie 12 entlang von Karosseriewandabschnitten erstreckende und an diesen fixierte Seitenträger 24 aufweist, die zusammen mit dem Querträger 22 eine Halteeinheit 26 bilden, welche zum Teil durch die Fahrzeugkarosserie 12 und zum Teil durch die Stoßfängereinheit 16 abgedeckt ist.

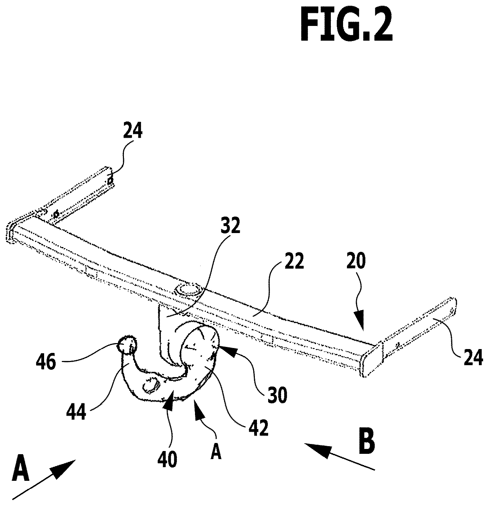

An der Halteeinheit 26 ist eine Halteplatte 32 einer als Ganzes mit 30 bezeichneten Lagereinheit vorgesehen, mit welcher ein als Ganzes mit 40 bezeichneter Kugelhals mit einem ersten Ende 42 verbunden ist, der außerdem an einem zweiten Ende 44 eine als Ganzes mit 46 bezeichnete Kupplungskugel trägt, wie in Fig. 1 und 2 dargestellt.

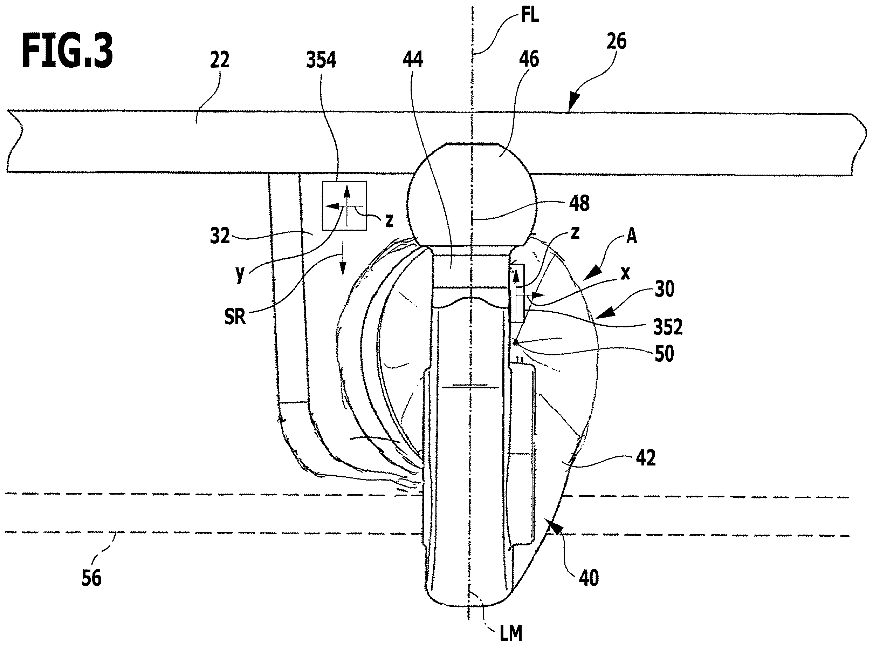

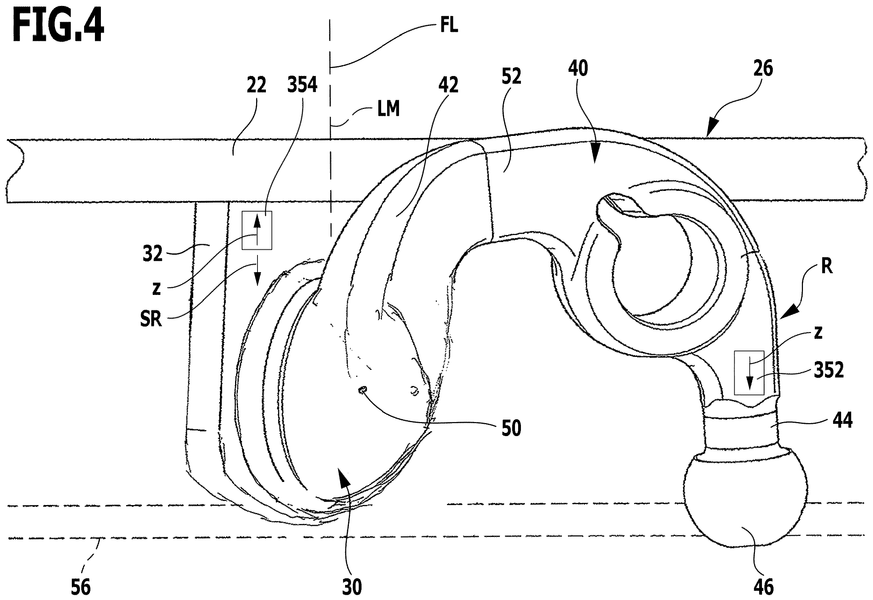

Durch die Lagereinheit 30 besteht die Möglichkeit, den Kugelhals 40, von einer in Fig. 2 und 3 dargestellten Arbeitsstellung A, in welcher eine Kugelmittelachse 48 der Kupplungskugel 46 in einer mit der Fahrzeuglängsmittelebene FL zusammenfallenden Längsmittelebene LM der Anhängekupplung 20 steht, um eine quer, insbesondere schräg, vorzugsweise in einem spitzen Winkel zur Fahrzeuglängsmittelebene FL verlaufende Schwenkachse 50 in eine in Fig. 4 dargestellte Ruhestellung R zu verschwenken, in welcher ein Mittelabschnitt 52 des Kugelhalses sich quer zur Fahrzeuglängsmittelebene FL erstreckt und die Kupplungskugel 46 seitlich der Fahrzeuglängsmittelebene FL liegt (Fig. 4).

Vorzugsweise ist dabei der Kugelhals 40 in der Ruhestellung R in einer durch die Stoßfängereinheit 16 der Fahrzeugkarosserie 12 abgedeckten Stellung seitlich der Fahrzeuglängsmittelebene FL angeordnet und - je nach Ausrichtung der Schwenkachse 50 - liegt der Kugelhals 40 auf einer einer Fahrbahn 54 abgewandten Seite der Kupplungskugel 46 oder der Kugelhals 40 liegt zumindest in einem derartigen Abstand von der Fahrbahn 54, dass er höher liegt als eine Unterkante 56 der Stoßfängereinheit 16 von der Fahrbahn 54.

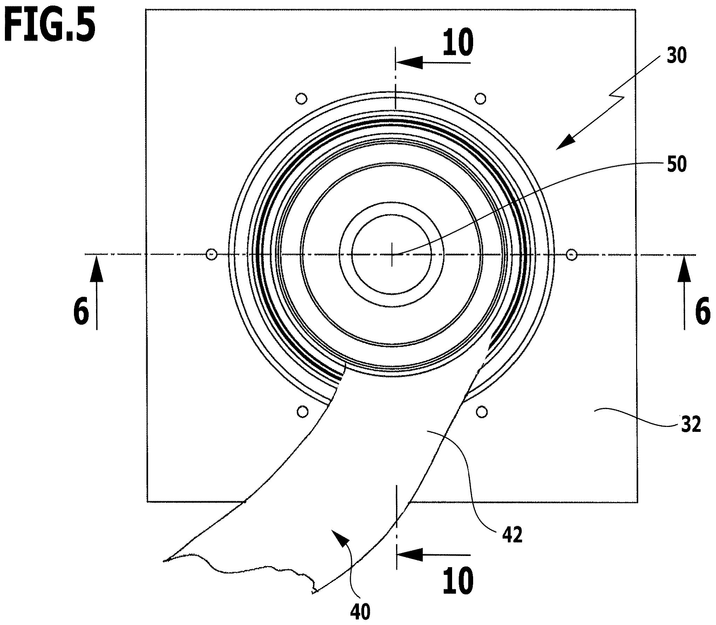

Wie in Fig. 5 bis 7 dargestellt, ist die als Ganzes mit 30 bezeichnete Lagereinheit beispielsweise an der Halteplatte 32 der Halteeinheit 26 so angeordnet, dass die Schwenkachse 50 senkrecht zur Halteplatte 32 verläuft, wobei beispielsweise die erfindungsgemäße Lagereinheit 30 sich beiderseits der Halteplatte 32 erstreckt.

Es ist aber auch möglich, die Lagereinheit 30 direkt mit der Halteeinheit 26 zu verbinden.

Die erfindungsgemäße Lagereinheit 30 umfasst eine Lagerbasis 60, welche beispielsweise in eine Öffnung 62 der Halteplatte 32 eingesetzt und mit der Halteplatte 32 durch Fügen verbunden ist und welche einen zentralen Durchlass 64 bildet, der zumindest in einem Teilabschnitt von einer als Hülse ausgebildeten Schwenklagerkörperaufnahme 66 umschlossen ist.

Vorzugsweise liegt die als Hülse ausgebildete Schwenklagerkörperaufnahme 66 in einer die Schwenklagerkörperaufnahme 66 aufnehmenden in die Lagerbasis 60 eingeformten Vertiefung 68 und grenzt an eine Frontseite 70 der Lagerbasis 60 an.

Relativ zu der Lagerbasis 60 ist ein Kugelhalsträger 80 um die Schwenkachse 50 verschwenkbar, welcher einen Schwenklagerkörper 82 aufweist, der in den Durchlass 64 eingreift und den Durchlass 64 der Lagerbasis 60 durchgreift.

Der Schwenklagerkörper 82 weist im Bereich eines äußeren Endes 84 einen äußeren Lagerabschnitt 86 auf, welcher zylindrische äußere Führungsflächen 88 trägt, die mit zylindrischen Führungsflächen 92 der Schwenklagerkörperaufnahme 66 zusammenwirken, so dass die zylindrischen Führungsflächen 88 und 92 koaxial zur Schwenkachse 50 angeordnet sind und eine äußere Schwenklagerung für den Schwenklagerkörper 82 bilden.

Der Schwenklagerkörper 82 erstreckt sich von dem äußeren Ende 84 ausgehend durch den Durchlass 64 hindurch und bildet an einem inneren Ende 94 einen in Form eines Zapfens ausgebildeten inneren Lagerabschnitt 96, welcher zylindrische innere Führungsflächen 98 trägt, die mit zylindrischen Führungsflächen 102 ebenfalls eine koaxial um die Schwenkachse 50 drehbare innere Schwenklagerung bilden, wobei die Führungsflächen 102 an einem Gehäusekörper 100 angeordnet sind, der fest mit der Halteplatte 32 und somit auch fest mit der Lagerbasis 60 verbunden ist.

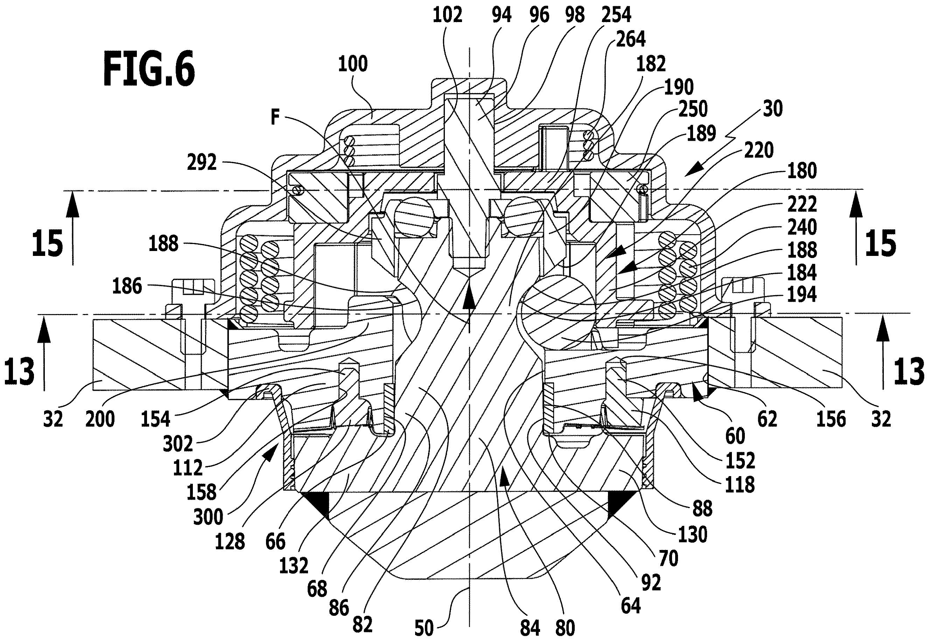

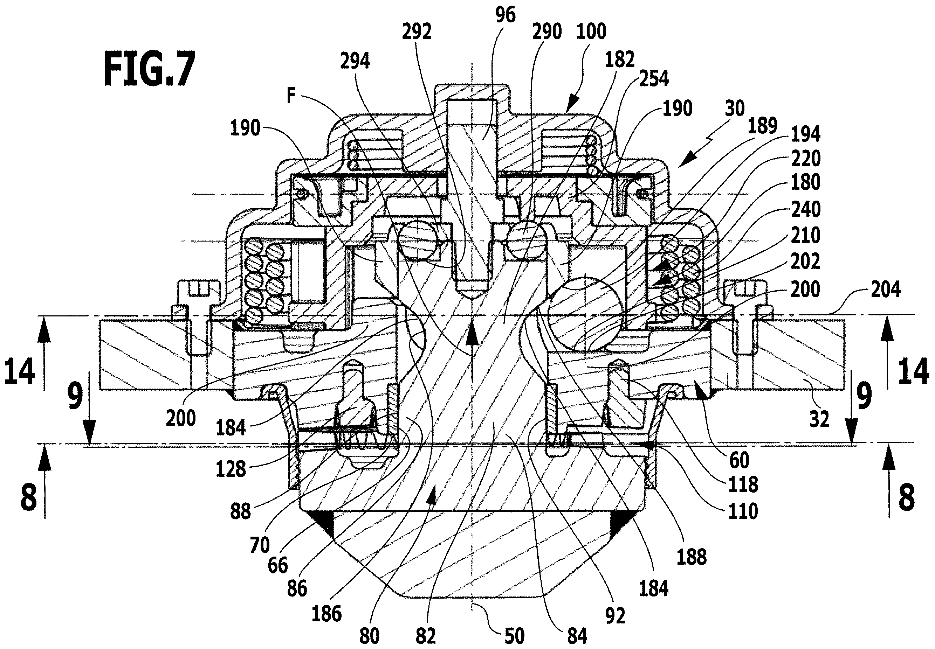

Wie in Fig. 6 und 7 dargestellt, ist der Kugelhalsträger 80 von einer in Fig. 6 dargestellten Fixierstellung in Richtung der Schwenkachse in eine in Fig. 7 dargestellte Lösestellung verschiebbar, wobei in der Lösestellung der Kugelhalsträger 80 derart in Richtung der Schwenkachse 50 verschoben ist, dass das äußere Ende 84 des Schwenklagerkörpers 82 zumindest teilweise über die Frontseite 70 der Lagerbasis 60 übersteht, das heißt dass der Schwenklagerkörper 82 insgesamt in Richtung der Frontseite 70 verschoben ist.

Der Schwenklagerkörper 82 ist aber auch in der Schwenkstellung sowohl mit dem inneren Lagerabschnitt 96, umfassend die innere Führungsfläche 98, in der Führungsfläche 102 koaxial zur Schwenkachse 50 geführt als auch mit dem äußeren Lagerabschnitt 86, umfassend die äußere Führungsfläche 88, in der Führungsfläche 92 der Schwenklagerkörperaufnahme 66, koaxial zur Schwenkachse 50 geführt.

Damit lässt die erfindungsgemäße Lagereinheit 30 sowohl ein Verschwenken des Kugelhalsträgers 80 als auch ein Verschieben des Kugelhalsträgers 80 in Richtung der Schwenkachse 50 zu, wobei sowohl in der Fixierstellung als auch in der Schwenkstellung eine um die Schwenkachse 50 drehbare Führung des Schwenklagerkörpers 82 erfolgt.

Vorzugsweise weist die äußere Führungsfläche 88 einen größeren Durchmesser auf als die innere Führungsfläche 98 und ist in der entsprechenden Führungsfläche 92 mit größerem Durchmesser geführt als die innere Führungsfläche 98 in der Führungsfläche 102, so dass die durch die äußere Führungsfläche 88 und die Führungsfläche 92 gebildete äußere Schwenklagerung in der Lage ist, größere Kräfte aufzunehmen als das durch die innere Führungsfläche 98 und die Führungsfläche 102 gebildete innere Schwenklagerung, wobei insbesondere die innere Schwenklagerung primär eine Führung gegen ein Verkanten der äußeren Führungsfläche 88 in der Führungsfläche 92 der äußeren Schwenklagerung darstellt.

Zum drehfesten Festlegen des Kugelhalsträgers 80 relativ zur Lagerbasis 60 ist eine als Ganzes mit 110 bezeichnete Fixiereinheit vorgesehen.

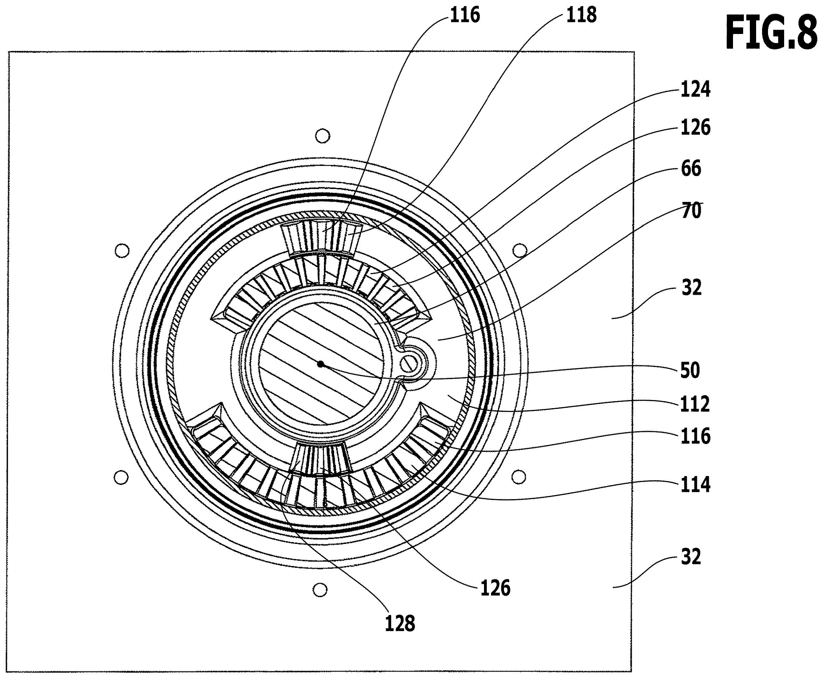

Diese Fixiereinheit 110 umfasst, wie in Fig. 6 und 8 dargestellt, einen radial außerhalb der Schwenklagerkörperaufnahme 66 angeordneten und die Frontseite 70 der Lagerbasis 60 bildenden Formschlusselemententräger 112, welcher als Formschlusselement ein radial außenliegendes erstes Zahnsegment 114 mit ersten Zähnen 116 aufweist, die sich über der Frontseite 70 erheben, wobei das erste Zahnsegment 114 mit einer Vielzahl der ersten Zähne 116 versehen ist, die sich beispielsweise über ein Bogensegment von mehr als 90°, beispielsweise ein Bogensegment von bis zu 120° um die Schwenkachse 50 erstrecken.

Ferner ist an dem Formschlusselemententräger 112 als Formschlusselement ein weiteres erstes Zahnsegment 118 vorgesehen, das ebenfalls erste Zähne 116 aufweist, allerdings nur wenige erste Zähne, beispielsweise drei derartige erste Zähne 116, so dass sich das weitere erste Zahnsegment lediglich über einen Bogenabschnitt erstreckt, der wesentlich kleiner ist als der Bogenabschnitt des ersten Zahnsegments.

Die beiden ersten Zahnsegmente 114 und 118 verlaufen in demselben radialen Abstand um die Schwenkachse 50.

Darüber hinaus ist beispielsweise dem ersten Zahnsegment 114 gegenüberliegend an dem Formschlusselemententräger 112 ein radial innenliegendes zweites Zahnsegment 124 vorgesehen, welches beispielsweise zwischen dem radial außenliegenden weiteren ersten Zahnsegment 118 und der Schwenklagerkörperaufnahme 66 an der Frontseite 70 angeordnet ist.

Auch dieses zweite Zahnsegment 124 weist eine Vielzahl von zweiten Zähnen 126 auf und erstreckt sich über einen Bogenabschnitt von mehr als 90°, vorzugsweise über einen Bogenabschnitt, welcher in seiner Ausdehnung dem des ersten Zahnsegments 114 ungefähr entspricht.

Dem zweiten Zahnsegment 124 gegenüberliegend ist vorzugsweise zwischen dem ersten Zahnsegment 114 und der Schwenklagerkörperaufnahme 66 an dem Formschlusselemententräger 112 ein weiteres zweites Zahnsegment 128 vorgesehen, welches ebenfalls zweite Zähne 126 aufweist, sich allerdings über einen deutlich geringeren Bogenabschnitt erstreckt als das zweite Zahnsegment 126, beispielsweise drei zweite Zähne 126 umfasst.

Die beiden zweiten Zahnsegmente 124, 128 verlaufen in demselben radialen Abstand um die Schwenkachse 50, der jedoch kleiner ist als der radiale Abstand der ersten Zahnsegmente 124, 128 von der Schwenkachse 50.

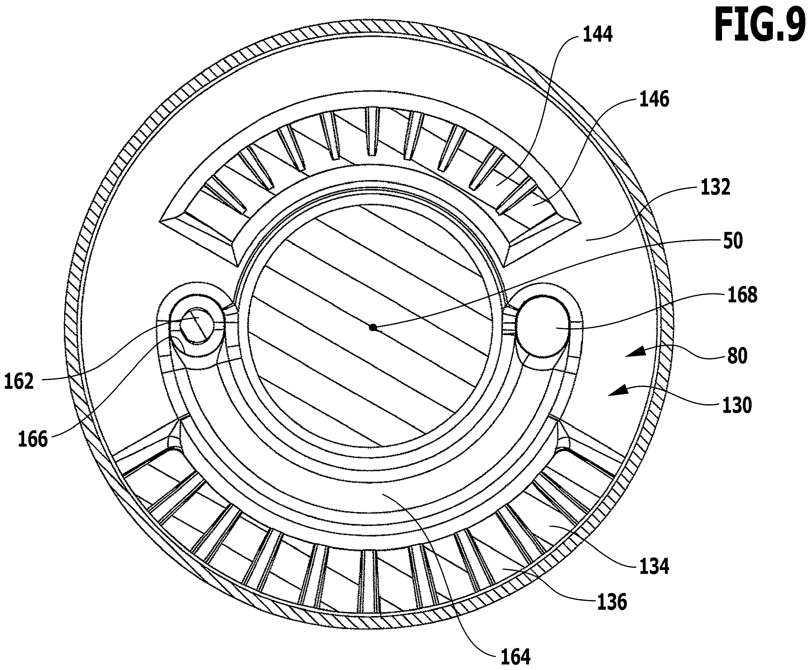

Die Fixiereinheit 110 umfasst zusätzlich zu dem stationären Formschlusselemententräger 112 mit den ersten Zahnsegmenten 114 und 118 sowie den zweiten Zahnsegmenten 124 und 126 einen in Fig. 9 dargestellten mit dem Kugelhalsträger 80 mitbewegbaren Formschlusselemententräger 132, welcher an einem über den Schwenklagerkörper 82 radial überstehenden und die Frontseite 70 der Lagerbasis 60 übergreifenden Schwenklagerkörperkopf 130 angeordnet ist. Der Formschlusselemententräger 132 weist seinerseits ein radial außenliegendes erstes Zahnsegment 134 mit ersten Zähnen 136 auf, sowie ein radial innenliegendes zweites Zahnsegment 144 mit zweiten Zähnen 146, wobei das erste Zahnsegment 134 und das zweite Zahnsegment 144 bezogen auf die Schwenkachse 50 einander gegenüberliegend angeordnet sind und wobei der radiale Abstand des ersten Zahnsegments 134 und der radiale Abstand des zweiten Zahnsegments 144 von der Schwenkachse 50 den radialen Abständen der entsprechenden Zahnsegmente 114, 118 bzw. 124, 128 des Formschlusselemententrägers 112 entsprechen.

Vorzugsweise sind bei dem bewegbaren Formschlusselemententräger 132 das erste Zahnsegment 134 und das zweite Zahnsegment 144 einstückig an den bewegbaren Formschlusselemententräger 132 angeformt und der bewegbare Formschlusselemententräger 132 ist einstückig an den Schwenklagerkörperkopf 130 angeformt, so dass letztlich die Zahnsegmente 134 und 144 einstückig mit dem Schwenklagerkörper 82 verbunden sind.

Bei der erfindungsgemäßen Lösung sind nun das erste Zahnsegment 114 und das zweite Zahnsegment 124 am stationären Formschlusselemententräger 112 sowie die Zahnsegmente 134 und 144 am bewegbaren Formschlusselemententräger 132 relativ zueinander und relativ zu den Schwenkstellungen des Kugelhalsträgers 80 so angeordnet, dass diese in der Arbeitsstellung A des Kugelhalses 40 beim Bewegen des Kugelhalsträgers 80 von der Schwenkstellung, dargestellt in Fig. 7, in die Fixierstellung, dargestellt in Fig. 6, im Wesentlichen vollständig miteinander in Eingriff bringbar sind, das heißt, dass die ersten Zahnsegmente 114 und 134 sowie die zweiten Zahnsegmente 124 und 144 im Wesentlichen vollständig miteinander, das heißt im Wesentlichen mit allen Zähnen, in Eingriff stehen.

Bewegt man dagegen den Kugelhalsträger 80 in der Arbeitsstellung A von der Fixierstellung in die Schwenkstellung, so kommen die ersten Zahnsegmente 114 und 134 sowie die zweiten Zahnsegmente 124 und 144 außer Eingriff und der Kugelhalsträger 80 mit dem Formschlusselemententräger 132 ist relativ zum stationären Formschlusselemententräger 112 und somit auch relativ zur Lagerbasis 60 frei um die Schwenkachse 50 verdrehbar, und zwar bis zum Erreichen der Ruhestellung R, in welcher ein Bewegen des Kugelhalsträgers 80 mit dem bewegbaren Formschlusselemententräger 132 von der Schwenkstellung in die Fixierstellung dazu führt, dass das erste Zahnsegment 134 des bewegbaren Formschlusselemententrägers 132 mit dem weiteren ersten Zahnsegment 118 des Formschlusselemententrägers 112 in Eingriff kommt und das zweite Zahnsegment 144 des bewegbaren Formschlusselemententrägers 132 mit dem weiteren zweiten Zahnsegment 128 des Formschlusselemententrägers 112 in Eingriff kommt, ohne dass Kollisionen mit dem ersten Zahnsegment 114 und dem zweiten Zahnsegment 124 auftreten, um in der Ruhestellung R ebenfalls den Kugelhals 40 relativ zur Halteeinheit 26 und drehfest zur Schwenkachse 50 zu fixieren. Da jedoch in der Ruhestellung R keine großen Belastungen auftreten und keine großen Momente auf den Kugelhals 40 wirken, sind in der Ruhestellung R die weiteren Zahnsegmente 118 und 128 mit wenigen ersten Zähnen 116 und zweiten Zähnen 126 ausreichend, um die Drehmomente um die Schwenkachse 50 aufzunehmen.

Da bei der erfindungsgemäßen Anhängekupplung 20 die Arbeitsstellung A stets feststeht, gegebenenfalls jedoch abhängig von verschiedenen Fahrzeugtypen der Schwenkwinkel zwischen der Arbeitsstellung A und der Ruhestellung R variieren kann und somit auch der Winkelabstand zwischen der Arbeitsstellung A und der Ruhestellung R variieren kann, ist bei der erfindungsgemäßen Lösung vorzugsweise vorgesehen, dass das weitere erste Zahnsegment 118 und das weitere zweite Zahnsegment 128 flexibel mit dem stationären Formschlusselemententräger 112 verbindbar sind. Wie in Fig. 6 beispielhaft dargestellt, sind das weitere erste Zahnsegment 118 und das weitere zweite Zahnsegment 128 mit Haltezapfen 152 und 154 versehen, die in Aufnahmebohrungen 156 und 158 im stationären Formschlusselemententräger 112 eingreifen und dadurch formschlüssig an diesem fixierbar sind.

Beispielsweise werden die Haltezapfen 152 und 154 in den Aufnahmebohrungen 156 und 158 noch stoffschlüssig fixiert.

Je nach Positionierung der Aufnahmebohrungen 156 und 158 relativ zu dem ersten Zahnsegment 114 und dem zweiten Zahnsegment 124 lässt sich somit auch flexibel die Position des weiteren ersten Zahnsegments 118 und des weiteren zweiten Zahnsegments 128 entsprechend dem Winkelabstand zwischen der Arbeitsstellung A und der Ruhestellung R typvariabel festlegen.

Bei dem in den Fig. 7 bis 9 dargestellten Ausführungsbeispiel stellen die Lagerbasis 60 mit dem stationären Formschlusselemententräger 112 und dem ersten Zahnsegment 114 sowie dem zweiten Zahnsegment 124 ein einstückiges Teil dar, welches beispielsweise aus Kostengründen als Gussteil hergestellt ist.

Ferner stellen bei dem in den Fig. 6 bis 9 dargestellten Ausführungsbeispiel der Schwenklagerkörper 82 mit dem Schwenklagerkörperkopf 130 und dem bewegbaren Formschlusselemententräger 132 mit dem ersten Zahnsegment 134 und dem zweiten Zahnsegment 144 ebenfalls ein einstückiges, vorzugsweise aus Guss herstellbares Teil dar.

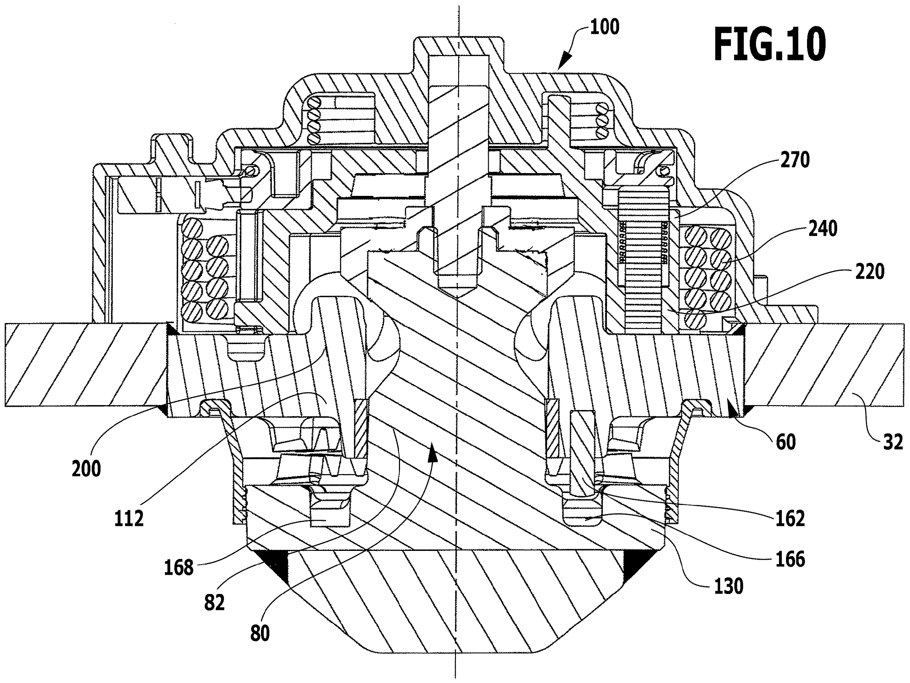

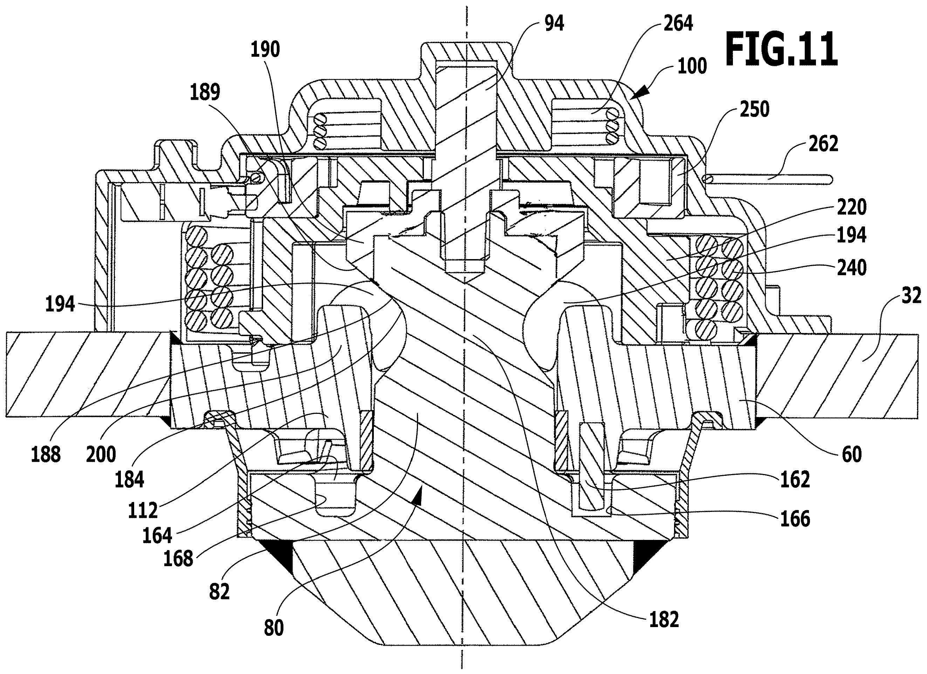

Um zu verhindern, dass beim Schwenken des Kugelhalsträgers 80 relativ zur Lagerbasis 60 um die Schwenkachse 50 zwischen der Arbeitsstellung A und der Ruhestellung R die Zahnsegmente 114 und 118 mit dem Zahnsegment 134 und die Zahnsegmente 124 und 128 mit dem Zahnsegment 144 in den Drehstellungen zwischen der Arbeitsstellung A und der Ruhestellung R in Eingriff kommen, ist eine Fixierblockiereinheit 160 vorgesehen, welche wie in Fig. 9 und 10 dargestellt, einen am stationären Formschlusselemententräger 112 angeordneten und über die Frontseite 70 und die Zahnsegmente 114, 118 sowie 124 und 128 überstehenden Bahnfolger 162 umfasst, welcher mit einer Führungsbahn 164 im bewegbaren Formschlusselemententräger 132 zusammenwirkt, die jeweils in der Arbeitsstellung A und der Ruhestellung R in eine Vertiefung 166 und 168 übergeht, in welche der Bahnfolger 162 dann eintauchen kann, wenn die Arbeitsstellung A und Ruhestellung R erreicht werden, während der Bahnfolger 162 dann, wenn er an der Führungsbahn 164 zwischen den Vertiefungen 166 und 168 entlanggleitet, ein in Eingriffkommen der Zahnsegmente 114 und 118 sowie 124 und 128 mit den Zahnsegmenten 134 und 144 verhindert, wie in Fig. 11 dargestellt.

Um den Kugelhalsträger 80 und insbesondere auch den stationären Formschlusselemententräger 112 mit dem bewegbaren Formschlusselemententräger 132 in der Fixierstellung der Fixiereinheit 110 in Eingriff zu halten, ist eine als Ganzes mit 180 bezeichnete axial wirkende Verriegelungseinheit 180 vorgesehen, die in den Fig. 6 und 7 sowie 13 und 14 dargestellt ist.

Somit bilden die Fixiereinheit 110 und die Verriegelungseinheit 180 zusammen eine Blockiereinrichtung 170, wobei die Blockiereinrichtung 170 in einer Blockierstellung das Verlassen der Fixierstellung der Fixiereinrichtung 110 aufgrund der nachfolgend beschriebenen Funktion der Verriegelungseinheit 180 verhindert und in einer Freigabestellung zulässt.

Die axial wirkende Verriegelungseinheit 180 umfasst dabei einen mit dem Kugelhalsträger 80, vorzugsweise dem Schwenklagerkörper 82 in axialer Richtung zur Schwenkachse 50 mitbewegbaren zentralen Aufnahmeträger 182, welcher vorzugsweise bei dem dargestellten Ausführungsbeispiel einstückig an den Schwenklagerkörper 82 angeformt ist und vorzugsweise mehrere Verriegelungsaufnahmen 184 aufweist, die bei diesem Ausführungsbeispiel beispielsweise durch eine umlaufende Vertiefung 186 im Schwenklagerkörper 82 gebildet ist, welche zwischen dem äußeren Lagerabschnitt 86 und dem inneren Lagerabschnitt 96 liegt, es können jedoch auch einzelne Verriegelungsaufnahmen 184 in dem zentralen Aufnahmeträger vorgesehen werden.

Jede Verriegelungsaufnahme 184 weist ihrerseits eine schräg, vorzugsweise konisch, zur Schwenkachse 50 und mit zunehmender radialer Erstreckung von der Schwenkachse 50 weg verlaufende Verriegelungsfläche 188 auf, an die sich eine mit derselben oder einer variierenden Neigung zur Schwenkachse 50 verlaufende Einzugsfläche 189 anschließt, die sich radial über den Lagerabschnitt 86 hinaus erstreckt.

Die Einzugsfläche 189 ist dabei zumindest zum Teil oder insgesamt beispielsweise an einem auf den Schwenklagerkörper 82 aufgesetzten und radial über den Schwenklagerkörper überstehenden Ringkörper 190 angeordnet.

Es wäre aber auch möglich, den Aufnahmeträger 182 so auszubilden, dass dieser die Einzugsfläche 189 in ihrer gesamten radialen Ausdehnung aufweist.

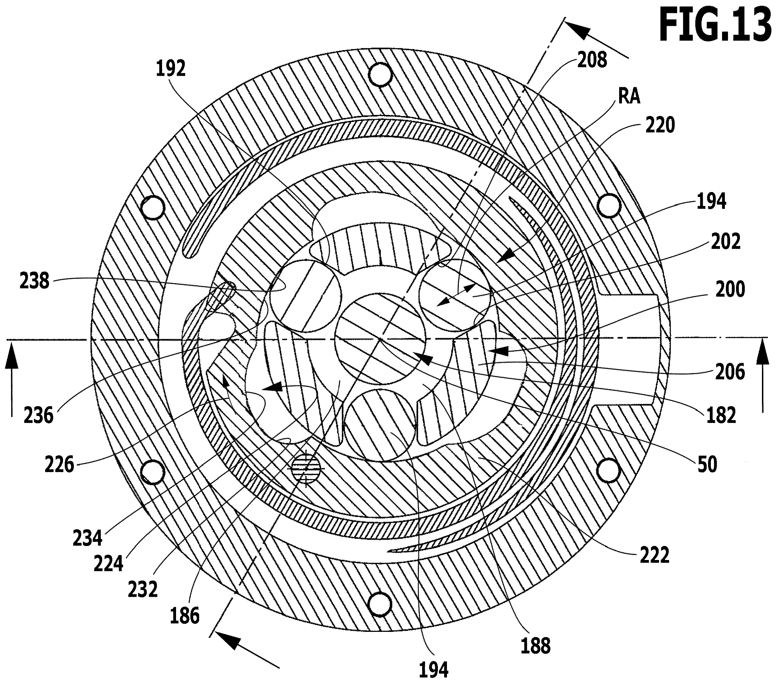

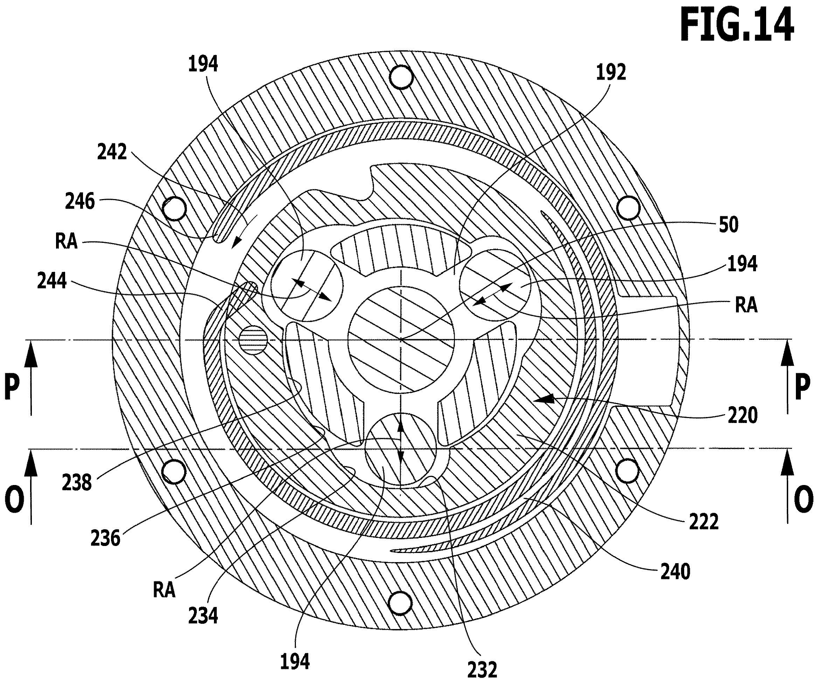

Mit den Verriegelungsaufnahmen 184 wirken, wie sich insbesondere aus den Fig. 13 und 14 ergibt, Verriegelungselemente 194 zusammen, die in einer radialen Richtung RA zur Schwenkachse 50 bewegbar in einem mit der Lagerbasis 60 verbundenen Führungsträger 200, und zwar in Führungen 202 desselben, so geführt sind, dass sie sich zumindest mit einer Komponente in der radialen Richtung RA bewegen können, und außerdem in einer Fläche 204 bewegbar sind, die quer zur Schwenkachse 50 verläuft, und vorzugsweise eine Ebene senkrecht zur Schwenkachse 50 darstellt.

Die Fläche 204 könnte jedoch theoretisch auch als zur Schwenkachse 50 zumindest geringfügig konische verlaufende Fläche ausgebildet sein.

Bei einer Bewegung der Verriegelungselemente 194 in den Führungen 202 führt bereits in der Lösestellung eine Beaufschlagung der Einzugsfläche 189 durch die Verriegelungselemente 194 zu einer parallel zur Schwenkachse 50 gerichteten Kraft F, welche der Kugelhalsträger 80 von der Schwenkstellung in Richtung der Fixierstellung bewegt und somit die Zahnsegmente 114, 118, 124, 128, 134, 144 der Formschlusselemententräger 112 und 132 in der Arbeitsstellung A oder der Ruhestellung R miteinander in Eingriff bringt, wobei zumindest bei Erreichen der Fixierstellung das Verriegelungselement 194 auf die Verriegelungsfläche 188 wirkt.

Die Führungen 202 sind vorzugsweise als nutähnliche Vertiefungen ausgebildet, die zwischen sich von dem Führungsträger 200 in Richtung des Gehäusekörpers 100 erstreckenden Rippen 206 liegen, wobei die Rippen 206 jeweils Seitenflächen 208 der Führungen 202 bilden, zwischen denen die Verriegelungselemente 194 in der radialen Richtung RA geführt sind, und außerdem bildet der Führungsträger 200 einen Führungsgrund 210, auf welchem sich die Verriegelungselemente 194 gegen eine Bewegung in Richtung der Schwenkachse 50 am Führungsträger 200 abstützen, welcher die Form der Fläche 204 definiert, längs welcher die Verriegelungselemente 194 bewegbar sind, um mit deren Verriegelungsaufnahmen 184 in Eingriff oder außer Eingriff zu kommen.

Ferner ist zur Bewegung der Verriegelungselemente 194 in der radialen Richtung RA in den Führungen 202 ein als Ganzes mit 220 bezeichnetes Betätigungselement vorgesehen, welches einen Betätigungsflächenträger 222 aufweist, welcher sämtliche Verriegelungselemente 194 auf ihrer den Verriegelungsaufnahmen 184 gegenüberliegenden radial außenliegenden Seite umschließt und für jedes der Verriegelungselemente 194 eine sich in einer Drehrichtung 226 erstreckende Betätigungsflächenfolge 224 aufweist, die von einem radial außenliegenden Freigabeflächenbereich 232, welcher, wie in Fig. 14 dargestellt, eine Lösestellung des jeweiligen Verriegelungselements 194 zulässt, in welcher dieses nicht in die Verriegelungsaufnahme 184 eingreift, in einen in der Drehrichtung 226 folgenden Verschiebeflächenbereich 234 übergeht, welcher in der Lage ist, das jeweilige Verriegelungselement 194 von der Lösestellung bis in eine Verriegelungsstellung zu überführen.

Im Anschluss an den Verschiebeflächenbereich 234 folgt in der Drehrichtung 226 ein Spannflächenbereich 236, welcher ebenfalls einen sich mit zunehmender Erstreckung in der Drehrichtung 226 verringernden radialen Abstand von der Schwenkachse 50 aufweist und dazu dient, die in der Verriegelungsstellung bereits stehenden Verriegelungselemente 194 mit konstanter oder variierender, beispielsweise zunehmender, Kraft in Richtung der für diese vorgesehenen Verriegelungsaufnahme 184 zu bewegen, bis ein Endflächenbereich 238 der Betätigungsflächenfolge 224 erreicht ist, in welchem das jeweilige Verriegelungselement 194 derart auf die Verriegelungsaufnahme 184 wirkt, dass in der Verriegelungsstellung ein Verspannen des Aufnahmeträgers 182 relativ zum Führungsträger 200 und aufgrund des mit dem Führungsträger 200 einstückig ausgebildeten Formschlusselemententrägers 112 ein Verspannen der Zahnsegmente 114, 118, 124, 128, 134, 144 der Formschlusselemententräger 112 und 132 eintritt.

Wie in Fig. 13 und 14 dargestellt, ist das Betätigungselement 220 im Bereich des Betätigungsflächenträgers 222 ringförmig ausgebildet und in dem Gehäuse 100 um die Schwenkachse 50 drehbar gelagert, so dass sich auch die Flächenbereiche 232, 234, 236 und 238 über in der Drehrichtung 226 aufeinanderfolgende Bogensegmente um die Schwenkachse 50 erstrecken und durch Verdrehung des Betätigungselements 220 um die Schwenkachse 50 verschiedene unterschiedliche der Flächenbereiche 232 bis 238 auf die Verriegelungselemente 194 wirken, um diese in der radialen Richtung RA zur Schwenkachse 50 in den Führungen 202 zu bewegen.

Um sicherzustellen, dass im beispielsweise manuell unbetätigten Zustand der erfindungsgemäßen Anhängekupplung das Betätigungselement 220 die Verriegelungselemente 194 stets so beaufschlag, dass diese die Tendenz haben, sich in Richtung der Verriegelungsaufnahmen 184 zu bewegen und die auf den Kugelhalsträger 80 wirkende Kraft F zu erzeugen, ist das Betätigungselement 220 durch eine Drehfeder 240 in Richtung einer Drehrichtung 242 im Sinne einer Bewegung von der Lösestellung in die Verriegelungsstellung oder Spannstellung beaufschlagt, so dass das Betätigungselement 220 stets das Bestreben hat, die Verriegelungselemente 194 in Richtung der Verriegelungsstellung oder der Spannstellung zu beaufschlagen, so dass die Verriegelungselemente 194 dadurch aufgrund der Wirkung der Drehfeder 240 in der unbetätigten Stellung des Betätigungselements 220 in der Schwenkstellung auf die Einzugsflächen 189 und/oder in der Fixierstellung auf die Verriegelungsflächen 188 wirken und dadurch den Aufnahmeträger 182 mit der Kraft F beaufschlagen, so dass dieser folglich die Tendenz hat, die Formschlusselemente 114, 118, 124, 128, 134, 144 der Formschlusselemententräger 112 und 132 in Eingriff zu bringen und/oder in Eingriff zu halten.

Vorzugsweise ist die Drehfeder 240 so ausgebildet, dass sie den Betätigungsflächenträger 222 des Betätigungselements 220 umschlingt und mit einem Ende 244 an dem Betätigungsflächenträger 222 des Betätigungselements 220 angreift, während sie mit einem anderen Ende 246 an der Lagerbasis 60 angreift und somit mit diesem Ende 246 relativ zu der Lagerbasis 60 fixiert ist.

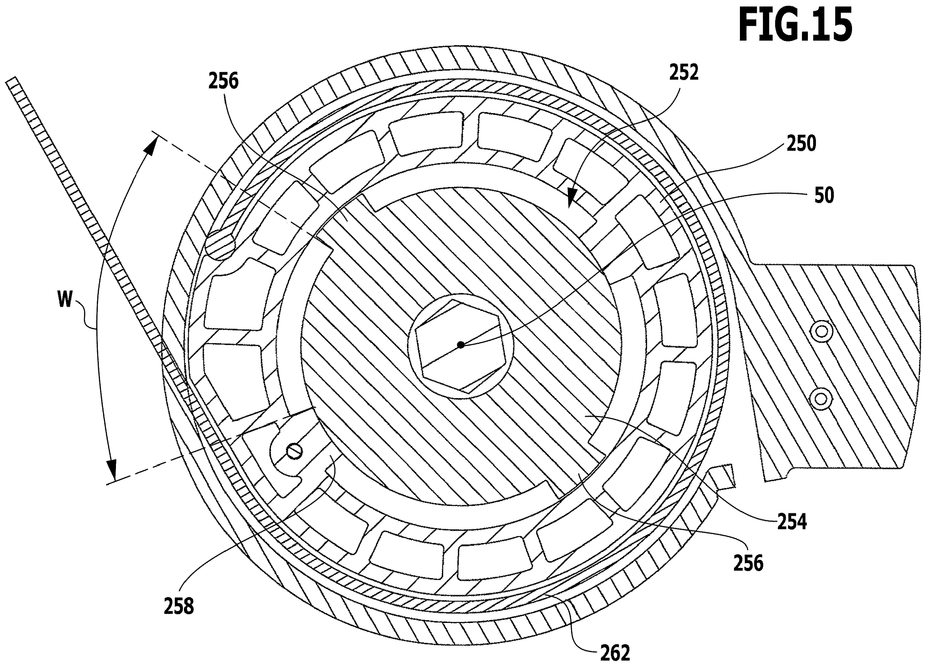

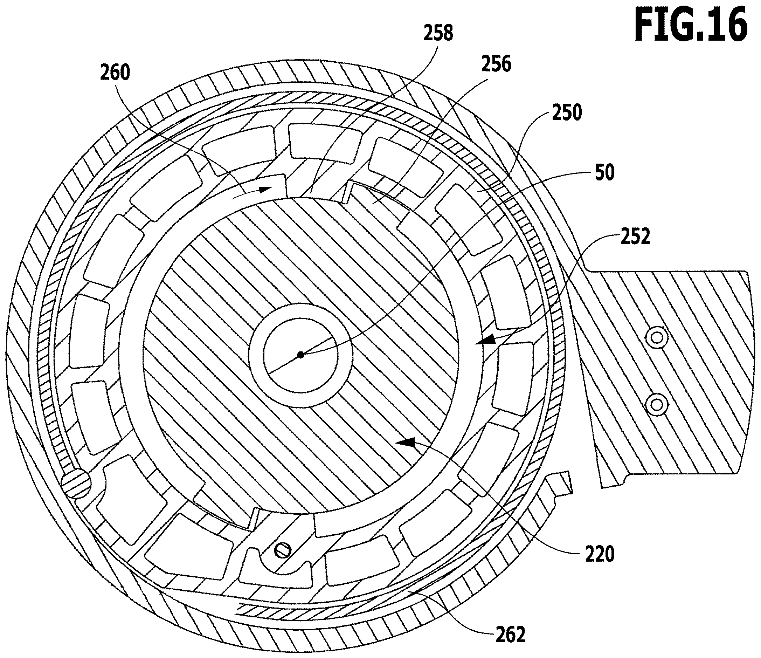

Zum Verdrehen des Betätigungselements 220 gegen die Kraft der Drehfeder 240 ist ein als Ganzes mit 250 bezeichnetes Drehmitnahmeelement vorgesehen, welches, wie in Fig. 15 und 16 dargestellt, sich ebenfalls ringförmig um die Schwenkachse 50 herum erstreckt und über eine Freigangkupplung 252 mit dem Betätigungselement 220 koppelbar ist.

Beispielsweise ist das Betätigungselement 220, wie in Fig. 6 und 7 dargestellt, an einem mit dem Betätigungsflächenträger 222 verbundenen und auf der der Lagerbasis abgewandten Seite des Betätigungsflächenträgers 222 angeordneten Innenteil 254 mit einem Nocken 256 versehen, welcher durch einen in Richtung des Nockens 256 vorspringenden Mitnehmer 258 des Drehmitnahmeelements 250 beaufschlagbar ist, um den Nocken 256 und somit auch das Betätigungselement 220 mit dem Drehmitnahmeelement 250 mitdrehen zu können.

In der Verriegelungsstellung und insbesondere der Spannstellung des Betätigungselements 220 und der nicht betätigten Stellung, das heißt einer Ausgangsstellung des Drehmitnahmeelements 250 liegt zwischen dem Mitnehmer 258 und dem Nocken 256 des Betätigungselements 220 ein Winkelabstand W vor, der dazu führt, dass sich das Betätigungselement 220 aus jeder seiner Stellungen frei in die Verriegelungsstellung, insbesondere die Spannstellung bewegen kann, wobei bei einer Betätigung, das heißt einem Drehen des Drehmitnahmeelements 250 zunächst keine Mitnahme des Betätigungselements 220 erfolgt und erst nach Durchlaufen des Winkelabstands W das Drehmitnahmeelement 250 das Betätigungselement 220 dadurch mitdreht, dass der Mitnehmer 258 auf den Nocken 256 in der Drehrichtung 260 wirkt und somit auch das Betätigungselement 220 mitdreht.

Die Drehbewegung des Drehmitnahmeelements 250 lässt sich beispielsweise, wie in Fig. 15 und 16 dargestellt, durch ein auf das Drehmitnahmeelement 250 wirkendes Zugseil 262 auslösen.

Das Drehmitnahmeelement 250 ist durch eine Drehfeder 264 in seine in Fig. 15 dargestellte Ausgangsstellung bringbar, während ein Ziehen am Zugseil 262 dazu führt, dass sich das Drehmitnahmeelement 250 entgegen der Kraftwirkung der Drehfeder 264 in der Drehrichtung 260 dreht, um dann ab einer Mitnahmestellung mit dem Mitnehmer 258 den Nocken 256 mitzunehmen und somit das Betätigungselement 220 mitzudrehen.

Die Freigangkupplung 252 dient dazu, eine Sicherungseinheit 270 zu entsichern, wobei die Sicherungseinheit 270 dazu dient, ein Verdrehen des Betätigungselements 220 aus der Verriegelungsstellung heraus zu verhindern.

Die Sicherungseinheit 270 umfasst ein Sicherungselement 272, welches parallel zur Schwenkachse 50 verschiebbar in dem Betätigungselement 220, vorzugsweise dem Betätigungsflächenträger 222, gelagert und mit einer Sicherungsaufnahme 274 in der Lagerbasis 60 in Eingriff bringbar ist und dann in Eingriff steht, wenn das Verdrehen des Betätigungselements 220 aus einer der möglichen Verriegelungsstellungen, umfassend die Spannstellungen, in die Lösestellung verhindert werden soll. Hierzu ist das Sicherungselement 272 vorzugsweise durch eine Feder 276 in einer Richtung so beaufschlagt, dass es sich selbsttätig aus der Sicherungsaufnahme löst, wenn die Bewegung des Sicherungselements 272 freigegeben ist.

Die Beaufschlagung des Sicherungselements 272 in Richtung der Sicherungsaufnahme 274 und das Eintauchen in die Sicherungsaufnahme 274 wird bewirkt durch eine Kulissenbahn 278 an dem Drehmitnahmeelement 250, wobei die Kulissenbahn 278 das Sicherungselement 272 mit der Sicherungsaufnahme 274 vorzugsweise kurz vor einer Mitnahme des Betätigungselements durch den auf den Nocken 256 wirkenden Mitnehmer 258 außer Eingriff kommen lässt, um ein Drehen des Betätigungselements 220 zuzulassen.

Sobald jedoch keine Einwirkung mehr auf das Drehmitnahmeelement 250 erfolgt und das Drehmitnahmeelement 250 seine Ausgangsstellung erreicht hat, hat auch das Betätigungselement 220 aufgrund der Wirkung der Drehfeder 240 seine Verriegelungsstellung oder Spannstellung erreicht, so dass das Sicherungselement 272 durch die Kulissenbahn 278 mit der Sicherungsaufnahme 274 in Eingriff gebracht wurde und durch die Kulissenbahn 278 in Eingriff gehalten wird.

Durch die Sicherungseinheit 270 wird somit eine zusätzliche Sicherung des Betätigungselements gegen ein selbsttätiges Lösen erreicht.

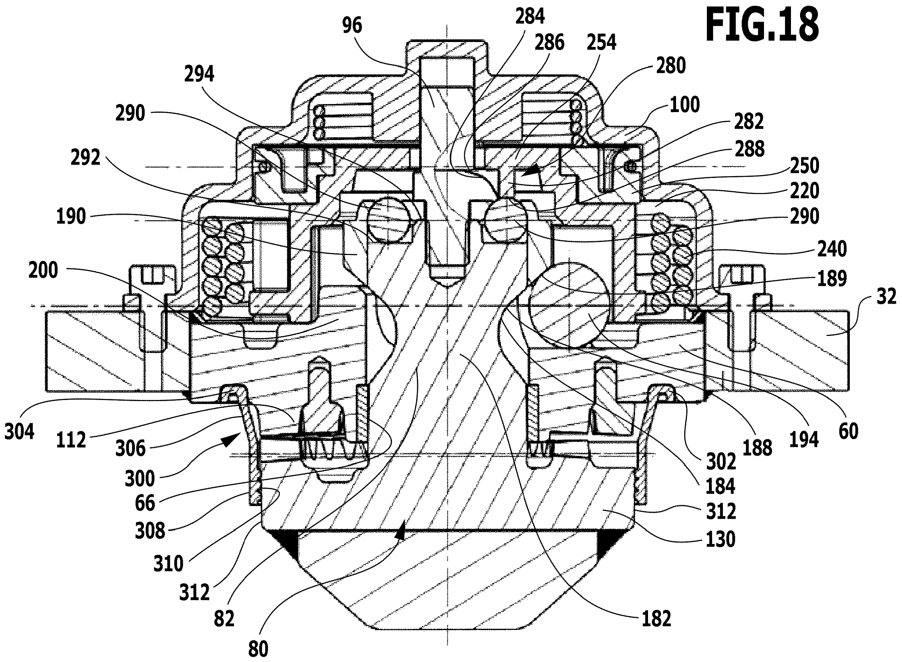

Um bei einem Überführen des Betätigungselements 220 von der Verriegelungsstellung, insbesondere der Spannstellung der Verriegelungsstellung, in die Lösestellung sicherzustellen, dass nicht nur die Verriegelungselemente 194 die Möglichkeit haben, in ihre radial außenliegende Stellung, in welcher sie an den Freigabeflächenbereichen 232 anliegen, überzugehen, sondern auch sicherzustellen, dass sich nach Übergang der Verriegelungselemente 194 in die Lösestellung auch der Kugelhalsträger 80, insbesondere der Schwenklagerkörper 82, entgegen der Richtung der Kraft F in Richtung der Schwenkachse 50 bewegt, ist, wie in Fig. 7 und 18 dargestellt, eine Ausschiebeeinheit 280 vorgesehen, welche ein Ausschiebeelement 282 aufweist, das an dem Innenteil 254 des Betätigungselements 220 vorgesehen ist und eine Schrägfläche 284 aufweist, die einen Bereich 286 mit maximalem Abstand von der Lagerbasis 60 aufweist und sich erhebt bis zu einem Bereich 288 mit minimalem Abstand von der Lagerbasis 60, so dass beim Drehen des Betätigungselements 220 die Schrägfläche 284 des Ausschiebeelements 282 auf ein Druckaufnahmeelement 290 wirkt, welches beispielsweise als Kugel ausgebildet ist und beispielsweise in einem stufenförmigen Übergangsbereich 292 des Schwenklagerkörpers 82 von dem den Aufnahmeträger 182 bildenden Bereich in den inneren Lagerabschnitt 96 angeordnet ist und in einen mit dem Ringkörper 190 verbundenen Käfigkörper 294 geführt und durch diesen am Schwenklagerkörper 82 gehalten ist.

Wenn das Druckaufnahmeelement 290 nun auf der Schrägfläche 284 von dem Bereich 286 entlanggleitet bis zum Bereich 288, so führt dies zu einer zunehmenden Verschiebung des Schwenklagerkörpers 82 und somit des gesamten Kugelhalsträgers 80 von der Fixierstellung, dargestellt in Fig. 6, in die Schwenkstellung, dargestellt in Fig. 7.

Das Ausschiebeelement 282 mit der Schrägfläche 284 ist dabei so angeordnet, dass diese auf das Druckaufnahmeelement 290, welches am Kugelhalsträger 80 angeordnet ist, dann wirkt, wenn das Betätigungselement 220 bereits soweit in der Drehrichtung 260 verdreht ist, dass dieses die Verriegelungselemente 194 freigibt und in die Lösestellung übergehen lässt. Dann wird das Ausschiebeelement 282 mit der Schrägfläche 284 wirksam und wirkt so auf das Druckaufnahmeelement 290 ein, dass bei einem Weiterdrehen des Betätigungselements 220 der Kugelhalsträger 80 und auch der Schwenklagerkörper 82 von der Fixierstellung durch eine Bewegung in Richtung der Schwenkachse 50 in die Schwenkstellung übergehen.

Mit der Ausschiebeeinheit 280 wird somit eine zwangsweise Bewegung des Kugelhalsträgers 80 und des Schwenklagerkörpers 82 von der Fixierstellung in die Lösestellung und somit auch ein Lösen der Formschlusselemente der Formschlusselemententräger 112 und 132 zwangsgesteuert erreicht.

Zur Abdichtung zwischen dem Schwenklagerkörper 60 und dem Kugelhalsträger 80 ist am Schwenklagerkörper 60, beispielsweise radial außerhalb des Formschlusselemententrägers 112 eine um diesen umlaufend angeordnete Dichteinheit 300 vorgesehen, welche mit einem Befestigungssegment 302 in einer Nut 304 in der Lagerbasis 60 fixiert ist und sich mit einem zylindrischen Abschirmsegment 306 ausgehend von dem Befestigungssegment 302 in Richtung des Schwenklagerkörperkopfes 130 erstreckt und mit einem Abschlusssegment 308, welches radial nach innen vorstehende und ringförmig um die Schwenkachse 50 umlaufende Rippen 310 trägt, und mit diesen an einer zur Schwenkachse 50 verlaufenden zylindrischen Umfangsfläche 312 des Schwenklagerkörperkopfes 130 anliegt, wobei beim Verschieben des Kugelhalsträgers 80 zwischen der Fixierstellung und der Schwenkstellung die zylindrische Umfangsfläche 312 relativ zum Abschlusssegment 308 und den Rippen 310 bewegbar ist, dabei ist das Abschlusssegment 308 mit den Rippen 310 jedoch derart angeordnet, dass sowohl in der Schwenkstellung als auch in der Fixierstellung das Abschlusssegment 308 mit den Rippen 310 dicht abschließend an der zylindrischen Umfangsfläche 312 anliegt.

Insbesondere ist dabei das Abschlusssegment 308 mit den Rippen 310 mit Untermaß bezüglich der zylindrischen Umfangsfläche 312 hergestellt, so dass das Abschlusssegment mit den Rippen 310 in radialer Richtung kraftbeaufschlagt an der zylindrischen Umfangsfläche 312 anliegt und für die erforderliche Dichtwirkung sorgt.

Das vorstehend beschriebene erfindungsgemäße Ausführungsbeispiel funktioniert dabei wie folgt.

Ausgehend von dem Fall, dass das Kugelhalsträger 80 entweder in der Arbeitsstellung A oder in der Ruhestellung R in seiner Fixierstellung steht, und somit in dieser Fixierstellung durch die Verriegelungseinheit 180 fixiert ist, führt eine Betätigung durch Ziehen an dem Zugseil 262 dazu, dass sich das Drehmitnahmeelement 250 in der Drehrichtung 260 dreht. So lange der Mitnehmer 258 den Nocken 256 noch nicht erreicht hat, erfolgt ein Lösen des Sicherungselements 272 der Sicherungseinheit 270 durch das bereits beschriebene Zusammenwirken zwischen dem Drehmitnahmeelement 250 und der Sicherungseinheit 270.

Nach Durchlaufen des Winkelabstands W erreicht der Mitnehmer 258 den Nocken 256 und wirkt auf das Betätigungselement 220 derart ein, dass dieses in der Drehrichtung 260 entgegen der Wirkung der Drehfeder 240 von der Verriegelungsstellung, insbesondere der Spannstellung in der Verriegelungsstellung, in Richtung seiner Lösestellung verdreht wird. Hierbei erhalten die Verriegelungselemente 194 die Möglichkeit, sich von der Verriegelungsstellung, insbesondere der Spannstellung in der Verriegelungsstellung, in Richtung ihrer Lösestellung zu bewegen, wie dies bereits beschrieben wurde.

Nachdem das Betätigungselement 220 so weit in der Drehrichtung 260 gedreht ist, dass die Verriegelungselemente 194 die Möglichkeit haben, vollständig in die Lösestellung überzugehen, wird die Ausschiebeeinheit 280 in der beschriebenen Art und Weise wirksam und verschiebt den Kugelhalsträger 80 von der Fixierstellung in die Schwenkstellung in der beschriebenen Art und Weise.

Beim Verschieben des Kugelhalsträgers 80 von der Fixierstellung in die Schwenkstellung erfolgt gleichzeitig ein Außereingriffkommen des Bahnfolgers 162 aus der der Anfangsstellung zugeordneten Vertiefung 166, 168 der Fixierblockiereinheit 160.

In der Schwenkstellung greifen die Formschlusselemente 114, 118, 124, 128, 134, 144 nicht mehr ineinander, sondern lassen eine freie Drehbarkeit um die Schwenkachse 50 zu, so dass nach Erreichen der Schwenkstellung der Kugelhalsträger 80 mit dem Kugelhals 40 von der Ausgangsstellung, beispielsweise der Arbeitsstellung oder der Ruhestellung, in die jeweilige Endstellung, beispielsweise die Ruhestellung bzw. die Arbeitsstellung, um die Schwenkachse 50 verschwenken kann, wobei unmittelbar nach Beginn des Verschwenkens des Kugelhalsträgers 80 um die Schwenkachse 50 der Bahnfolger 162 nicht mehr einer der Vertiefungen 166 und 168 gegenübersteht, sondern der Führungsbahn 164 gegenübersteht.

Wird unmittelbar nachdem der Bahnfolger 162 der Führungsbahn 164 gegenübersteht, auf das Zugseil 262 nicht mehr eingewirkt, so bewegt sich das Drehmitnahmeelement 250 entgegengesetzt zur Drehrichtung 260 in Richtung seiner Ausgangsstellung und folglich ist das Betätigungselement 220 der Kraftwirkung der Drehfeder 240 ausgesetzt, die das Bestreben hat, das Betätigungselement 220 von der Lösestellung in die Verriegelungsstellung und dabei insbesondere in die Spannstellung derselben, zu bewegen. Dies führt zu einer Beaufschlagung der Verriegelungselemente 194, die dadurch auf die Einzugsfläche 189 wirken und dadurch die Kraft F auf den Aufnahmeträger 182 und somit auch den Kugelhalsträger 80 erzeugen.

Dies führt dazu, dass aufgrund der Kraft F die Führungsbahn 164 mit der Kraft F gegen den Bahnfolger 162 wirkt, der Bahnfolger 162 jedoch verhindert, dass sich der Kugelhalsträger 80 von der Schwenkstellung in die Fixierstellung bewegt.

Somit ist so lange ein Drehen des Kugelhalsträgers 80 und somit auch des Kugelhalses 40 möglich, bis dieser die jeweilige Endstellung erreicht hat, in welcher der Bahnfolger 162 wieder einer der Vertiefungen 168 bzw. 166 gegenübersteht. Somit kann in dieser Endstellung der Kugelhalsträger 80 sich von der Schwenkstellung in die Fixierstellung bewegen, wobei dies unter Einwirkung der von den Verriegelungselementen 194 im Zusammenwirken mit der Einzugsfläche 189 erzeugten Kraft F erfolgt, die auch dann noch vorhanden ist, wenn die Verriegelungselemente die Verriegelungsflächen 188 des Aufnahmeträgers 182 beaufschlagen.

Beim Bewegen des Kugelhalsträgers 80 von der Schwenkstellung in die Fixierstellung kommen die Formschlusselemente 114, 118, 124, 128 sowie 134 und 144 miteinander in Eingriff, so dass die Fixiereinheit 110 wiederum für eine drehfeste Festlegung des Kugelhalsträgers 80 und somit des Kugelhalses 40 in dieser Endstellung, das heißt der Ruhestellung bzw. der Arbeitsstellung, sorgt.

Beim Bewegen des Aufnahmeträgers 182 von der Schwenkstellung in die Fixierstellung wandern auch die Verriegelungselemente 194 von ihrer Lösestellung in die Verriegelungsstellung, insbesondere sogar die Spannstellung, unter Einwirkung der Betätigungsflächenfolge 224 in der beschriebenen Art und Weise, so dass dadurch auch das Betätigungselement 220 die Möglichkeit hat, sich in die Verriegelungsstellung, insbesondere in die Spannstellung der Verriegelungsstellung, zu bewegen, so dass wiederum der Nocken 256 im Winkelabstand W von dem Mitnehmer 258 des Drehmitnahmeelements 250 steht, so dass wiederum der Ausgangszustand vorliegt, von welchem ausgehend die Funktion der erfindungsgemäßen Anhängekupplung beschrieben wurde.

Beim Zurückbewegen des Betätigungselements 220 entgegengesetzt zur Drehrichtung 260 erfolgt bei Erreichen der Verriegelungsstellung wiederum ein Wirksamwerden der Sicherungseinheit 270 durch Ineingriffkommen des Sicherungselements 272 mit der Sicherungsaufnahme 274, wobei das Sicherungselement 272 durch das von der Drehfeder 264 beaufschlagte Drehmitnahmeelement 250 entgegen der Kraft der Feder 276 in die Sicherungsaufnahme 274 hinein bewegt wird.

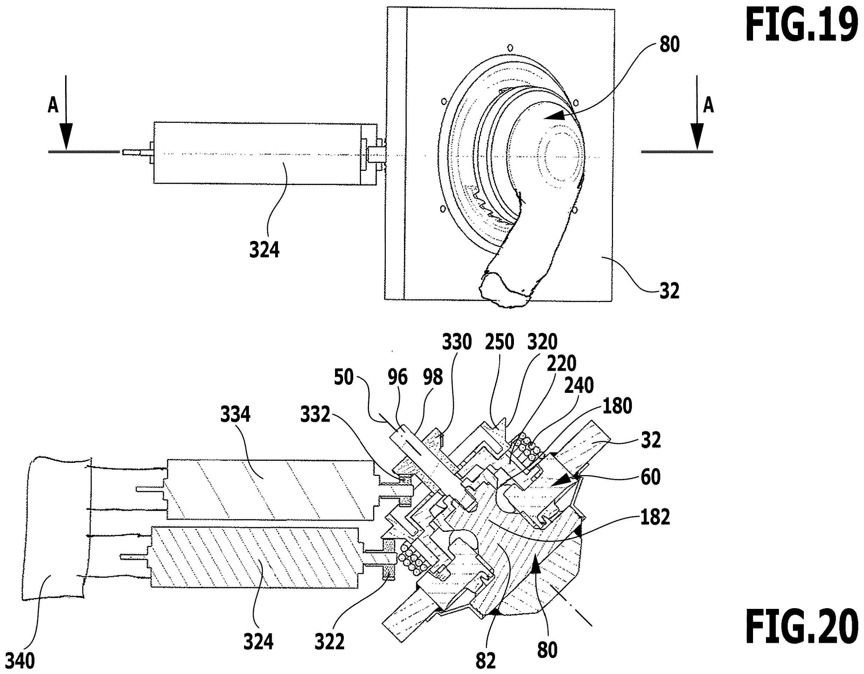

Bei einem zweiten Ausführungsbeispiel der erfindungsgemäßen Anhängekupplung, dargestellt in den Fig. 19 und 20, sind all diejenigen Elemente, die mit denen des voranstehend beschriebenen Ausführungsbeispiels identisch sind, mit denselben Bezugszeichen versehen, so dass vollinhaltlich auf die Ausführungen hierzu Bezug genommen werden kann.

Im Gegensatz zum ersten Ausführungsbeispiel ist das Drehmitnahmeelement 250 nicht durch ein Seilzug antreibbar, sondern mit einer Außenverzahnung 320 versehen, die beispielsweise konisch zur Schwenkachse 50 verläuft.

Mit dieser Außenverzahnung 320 ist ein Antriebsritzel 322 in Eingriff, welcher durch einen Betätigungsmotor 324 antreibbar ist, der vorzugsweise noch ein integriertes Untersetzungsgetriebe aufweist.

Ferner ist zwischen dem inneren Lagerabschnitt 96, der die innere Führungsfläche 98 trägt, und dem Aufnahmeträger 182 der Verriegelungseinheit 180 ein Antriebsrad 330 vorgesehen, welches drehfest mit dem Schwenklagerkörper 82 verbunden ist, wobei das Antriebsrad 330 beispielsweise als Kegelrad ausgebildet ist.

Mit dem Antriebsrad 330 ist ein Antriebsritzel 332 in Eingriff, welches durch einen Schwenkmotor 334 antreibbar ist.

Sowohl der Schwenkmotor 334 als auch der Betätigungsmotor 324 sind durch eine als Ganzes mit 340 bezeichnete Steuerung ansteuerbar, welche den Betätigungsmotor 324 und den Schwenkmotor 334 wie folgt ansteuert.

Wird zum Beispiel ausgehend von der Fixierstellung des Kugelhalsträgers 80 und der Verriegelungsstellung der Verriegelungseinheit 180 ein Überführen des Kugelhalsträgers 80 in die Schwenkstellung angestrebt, so wird von der Steuerung 340 zunächst der Betätigungsmotor 324 angesteuert, so dass dieser das Drehmitnahmeelement 250 von der Ausgangsstellung in die Mitnahmestellung bewegt und dann in der Mitnahmestellung das Betätigungselement 220 so verdreht, dass dieses von seiner Spannstellung oder Verriegelungsstellung in die Lösestellung übergeht und somit die Verriegelung des Aufnahmeträgers 182 seitens der Verriegelungseinheit 180 löst.

Ferner wird das Betätigungselement 220 durch den Betätigungsmotor 324 noch so lange weitergedreht, bis die Ausschiebeeinheit 280 der Kugelhalsträger 80 von der Fixierstellung in die Schwenkstellung, beispielsweise dargestellt in Fig. 7, verschoben hat.

Nach Erreichen der Schwenkstellung wird der Betätigungsmotor 324 gestoppt.

Gleichzeitig mit dem Erreichen der Schwenkstellung wird der Schwenkmotor 334 aktiviert, welcher ein Schwenken von der Arbeitsstellung in die Ruhestellung oder von der Ruhestellung in Arbeitsstellung veranlasst.

Bereits nach Beginn des Verschwenkens des Kugelhalsträgers 80 kann der Betätigungsmotor 324 in umgekehrter Richtung betrieben werden, so dass sich das Drehmitnahmeelement 250 wiederum angetrieben durch den Betätigungsmotor 324 in die Ausgangsstellung bewegt.

Ohne Einwirkung des Betätigungsmotors 324 auf das Betätigungselement 220 wirkt auf dieses die Drehfeder 240 und folglich beaufschlagt das Betätigungselement 220 die Verriegelungselemente 194 in Richtung der Verriegelungsstellung, so dass diese durch Einwirken auf die Einzugsfläche 189 die Kraft F auf den Kugelhalsträger 80 erzeugen.

Die Kraft F führt jedoch bis zum Erreichen der jeweiligen Endstellung, das heißt der Arbeitsstellung oder der Ruhestellung, nicht zu einer Bewegung in Richtung der Fixierstellung, da diese durch das Zusammenwirken des Bahnfolgers 162 mit der Führungsbahn 184 verhindert wird.

Sobald der Kugelhalsträger 80 die Endstellung, das heißt die Ruhestellung bzw. die Arbeitsstellung erreicht hat, erfolgt ein Bewegen des Aufnahmeträgers 182 und somit des Kugelhalsträgers 80 in Richtung der Fixierstellung, da die Verriegelungselemente 194, beaufschlagt durch das Betätigungselement 220, insbesondere die Betätigungsflächenfolge 224 und ausgelöst durch die

Drehfeder 240 die Kraft F erzeugen und der Übergang in die Fixierstellung dadurch möglich ist, dass in der jeweiligen Endstellung der Bahnfolger 162 in die Vertiefungen 166 und 168 eintreten kann und somit ein Bewegen des Kugelhalsträgers 80 von der Schwenkstellung in die Fixierstellung zulässt.

Dabei wird seitens der Steuerung 340 jeweils nach Erreichen der Endstellung der Schwenkmotor 334 abgeschaltet.

Bei den beschriebenen Ausführungsbeispielen ist, wie in den Fig. 3 und 4 sowie Fig. 21 dargestellt, ein Sensorsystem 350 vorgesehen, welches einen ersten Sensor 352 und in einem zweiten Sensor 354 umfasst, wobei der erste Sensor 352 am Kugelhals 40 angeordnet ist und somit um die Schwenkachse 50 bewegbar ist, während der zweite Sensor 354 relativ zur Lagerbasis 60 und somit auch zur Halteeinheit 26 stationär angeordnet ist.

Der erste Sensor 352 und der zweite Sensor 354 sind vorzugsweise in MEMS-Technologie aufgebaute Mikroelektromechanische Systeme, die beispielsweise sowohl als Beschleunigungssensor als auch als Neigungssensor eingesetzt werden können.

Wie in den Fig. 3 und 4 sowie Fig. 21 dargestellt, ist jeder dieser Sensoren 352, 354 als ungefähr quaderförmiger Block ausgebildet und in der Lage, in einer Raumrichtung X, Y oder Z und/oder in zwei Raumrichtungen und/oder in drei Raumrichtungen, beispielsweise den Raumrichtungen X, Y, Z Beschleunigungen zu messen und darüber hinaus in der Lage, in der YZ-Ebene Neigungen um die X-Achse als Drehachse und in der X-Z-Ebene Neigungen um die Y-Achse als Drehachse zu erfassen, wenn man davon ausgeht, dass das Koordinatensystem so ausgerichtet ist, dass die Z-Achse den kleinsten Winkel mit einer Schwerkraftrichtung SR einschließt, also insbesondere ungefähr parallel zu dieser verläuft.

Vorzugsweise sind die Sensoren 352 und 354 so ausgerichtet, dass bei dem ersten Sensor 352 die Z-Achse in der Arbeitsstellung A des Kugelhalses 40 im Wesentlichen parallel zu der Schwerkraftrichtung SR oder in einem kleinen spitzen Winkel zu dieser verläuft und auch in der Ruhestellung, allerdings in invertierter Richtung ebenfalls im Wesentlichen parallel zur Schwerkraftrichtung SR oder in einem spitzen Winkel zu dieser verläuft.

Ferner ist der zweite Sensor 354 gemäß den Fig. 3 und 4 sowie Fig. 21 so ausgerichtet, dass dessen Z-Richtung bei üblicher Montage der Anhängekupplung 20 an einem Kraftfahrzeug 10 und einer Anordnung des Kraftfahrzeugs 10 auf einer horizontalen Fläche ebenfalls im Wesentlichen parallel oder in einem kleinen spitzen Winkel zur Schwerkraftrichtung SR verläuft.

Unter der Angabe "im Wesentlichen parallel" sind Abweichungen von einer exakt parallelen Ausrichtung von bis zu 5° (Winkelgrad) zu verstehen und unter "in einem kleinen spitzen Winkel zur Schwerkraftrichtung SR" sind Winkel von bis zu 30° zu verstehen.

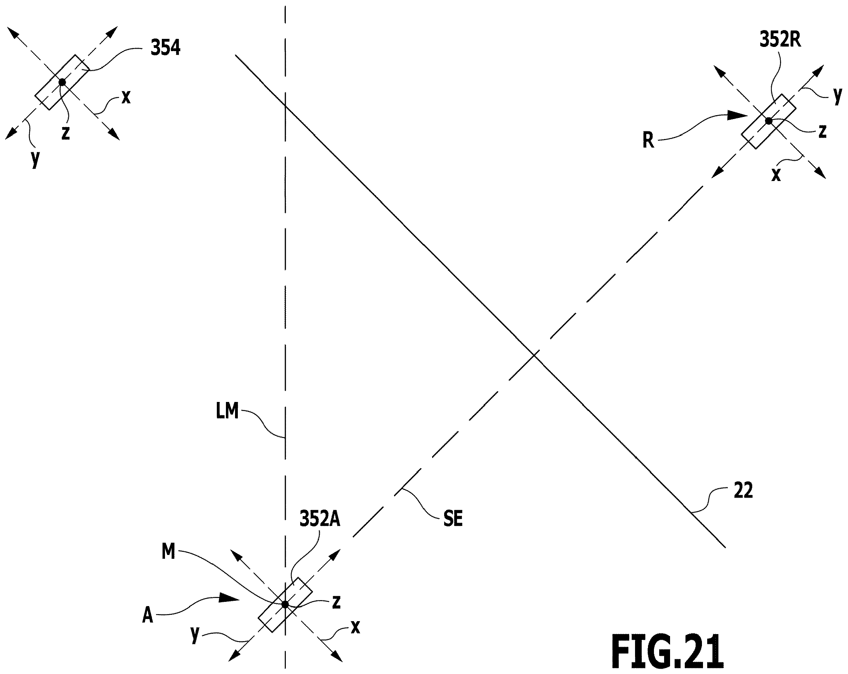

Ferner ist der Sensor 352 in der Arbeitsstellung 352A (Fig. 21) so angeordnet, dass dessen Y-Richtung parallel zu einer senkrecht zur Schwenkachse 50 verlaufenden Schwenkebene SE verläuft und dessen X-Richtung senkrecht zu der senkrecht zur Schwenkachse 50 verlaufenden Schwenkebene SE, also parallel zur Schwenkachse 50, verläuft und in der Ruhestellung 352R so angeordnet, dass die Y-Richtung ebenfalls parallel zu der senkrecht zur Schwenkachse 50 verlaufenden Schwenkebene SE verläuft und die X-Richtung näherungsweise senkrecht zu der senkrecht zur Schwenkachse 50 verlaufenden Schwenkebene SE verläuft.

Ferner ist, wie in Fig. 21 dargestellt, der zweite Sensor 354 so angeordnet, dass dessen Y-Richtung parallel zu der senkrecht zur Schwenkachse 50 verlaufenden Schwenkebene SE verläuft und dessen X-Richtung senkrecht einer senkrecht zur Schwenkachse 50 verlaufenden Schwenkebene SE, also parallel zur Schwenkachse 50, verläuft.

Es ist aber in gleicher Weise denkbar, den zweiten Sensor 354 anzuordnen, dass dessen X-Richtung parallel zur vertikalen Längsmittelebene LM der Anhängekupplung 20 verläuft und dessen Y-Richtung quer, vorzugsweise senkrecht zur vertikalen Längsmittelebene LM der Anhängekupplung 10 verläuft, in diesem Fall ist dann eine Umrechnung der Messwerte des zweiten Sensors 354 in dessen Koordinationssystem auf die Ausrichtung des Koordinationssystems des ersten Sensors 352 erforderlich, um eine Neigungsdifferenz zu ermitteln.

Die beiden Sensoren 352 und 354 sind mit einer Auswerteeinheit 358 des Sensorsystems 350 verbunden, welche aufgrund folgender Auswertung der Signale der Sensoren 352 und 354 Stellungsinformationen SI liefert.

Wie sich aus den Fig. 3 und 4 sowie Fig. 21 ergibt, führt ein Verschwenken des Kugelhalsträgers 80 mitsamt dem Kugelhals 40 von der in Fig. 3 dargestellten Arbeitsstellung A in die in Fig. 4 dargestellte Ruhestellung R dazu, dass der erste Sensor 352 eine Veränderung der Neigung seiner Z-Achse relativ zur Schwerkraftrichtung SR um die X-Achse als Neigungsachse in der zur Schwenkebene SE parallelen YZ-Ebene detektiert und über einen Zustand, in welchem die Z-Richtung ungefähr senkrecht zur Schwerkraftrichtung SR verläuft, mit bezogen auf die Arbeitsstellung A zunehmender Neigung in der YZ-Ebene in die Ruhestellung R mit invertierter Ausrichtung übergeht, wobei beispielsweise in der Ruhestellung R die Z-Richtung relativ zur Z-Richtung in der Arbeitsstellung A um ungefähr 180° gedreht und somit invertiert ist.

Bereits diese Inversion der Z-Richtung beim Übergang von der Arbeitsstellung A in die Ruhestellung R würde für eine grobe Erkennung der Arbeitsstellung A und der Ruhestellung R ausreichend sein, insbesondere wenn die zwischen diesen Inversionen der Z-Richtung liegenden variierenden Neigungen der Z-Richtung in der YZ-Ebene von der Auswerteeinheit 358 mit berücksichtigt werden.

Eine Verbesserung der Auswertung der Neigung der Z-Richtung in der YZ-Ebene beim Übergang von der Arbeitsstellung A in die Ruhestellung R oder umgekehrt, ist dann noch erreichbar, wenn die Signale des Sensors 352 in Relation zur Ausrichtung des zweiten Sensors 354 gebracht werden, welcher einen Referenzsensor für die Ausrichtung der Anhängekupplung 20 im Raum darstellt und somit aufgrund der, beispielsweise in einer der Endstellungen, insbesondere in der Arbeitsstellung A oder der Ruhestellung R, bekannten, beispielsweise parallelen, Ausrichtung der Z-Achsen eine Differenzmessung ermöglicht, die somit auch bei einer Schrägstellung des Kraftfahrzeugs 10 in jeder beliebigen Richtung einen zuverlässigen Referenzwert für die Lage der Z-Richtung des ersten Sensors 352 in einer der Endstellungen, insbesondere in der Arbeitsstellung A oder der Ruhestellung R, relativ zu der Ausrichtung der Z-Richtung des zweiten Sensors 354 im Raum ergibt.

Vorzugsweise ist die Auswerteeinheit 358 noch mit einem Referenzwertspeicher RWS versehen, in welchem für die relativen Ausrichtungen der Z-Achse des ersten Sensors 352 bezogen auf die Ausrichtung der Z-Achse des zweiten Sensors 354 Referenzwerte abgelegt sind, die mit Winkelangaben des Drehwinkels um die Schwenkachse 50 bei der Ausführung der rotatorischen Bewegung des Kugelhalses 40 verknüpft sind, so dass aus der Neigung der Z-Achse des ersten Sensors 352 in Relation zur Ausrichtung der Z-Achse des zweiten Sensors 354 auf den Drehwinkel, bezogen auf die Schwenkachse 50, und den Winkelabstand von den jeweiligen Endstellungen, das heißt der Arbeitsstellung A und der Ruhestellung R, geschlossen werden kann.

Da bei den vorstehend beschriebenen Ausführungsbeispielen beim Übergang des Kugelhalsträgers 80 von der Fixierstellung in die Schwenkstellung und umgekehrt eine Verschiebung desselben in Richtung der Schwenkachse 50 erfolgt, erfolgt mittels des ersten Sensors 352 auch eine Erfassung dieser translatorischen Bewegung durch die in Richtung der Schwenkachse 50 auftretenden Beschleunigungen, die sich insbesondere dann, wenn die X-Achse parallel zur Schwenkachse 50 ausgerichtet ist, vorteilhaft als Beschleunigungen in der X-Richtung im Koordinatensystem des ersten Sensors 352 erfassen lassen, wobei insbesondere Anfangsbeschleunigungen zu Beginn der translatorischen Bewegung in Richtung der Schwenkachse als auch aufgrund der Begrenzung der Bewegung in der Lösestellung und der Fixierstellung durch Anschlagelemente auch den Anfangsbeschleunigungen entgegengesetzte Endbeschleunigungen auftreten.

Sowohl die Anfangsbeschleunigungen als auch die Endbeschleunigungen lassen sich durch den ersten Sensor 352 über eine Zeitachse erfassen.

Zur Eliminierung von gegebenenfalls auftretenden Störbeschleunigungen werden die Beschleunigungen in Richtung der Schwenkachse 50 ebenfalls durch den zweiten Sensor 354 erfasst und Differenzwerte zu den vom ersten Sensor erfassten Beschleunigungen gebildet, so dass die Auswerteeinheit 358 auch Stellungsinformationen zu den translatorischen Bewegungen in Richtung der Schwenkachse 50 ermitteln kann.

Die von dem Sensorsystem 350 generierte Stellungsinformation SI, die insbesondere Stellungsinformationen betreffend die translatorische Bewegung in Richtung der Schwenkachse 50 als auch betreffend die rotatorische Bewegung um die Schwenkachse 50 umfasst, wird bei dem zweiten Ausführungsbeispiel der Steuerung 340 übermittelt, welche den Betätigungsmotor 324 und den Schwenkmotor 334 ansteuert.

Bei dem zweiten Ausführungsbeispiel wird die Steuerung 340 durch eine Ablaufsteuerung 370 angesteuert.

Die Steuerung 340 wirkt zusätzlich mit je einem Drehbewegungssensor 362 und 364 des Betätigungsmotors 324 beziehungsweise des Schwenkmotors 334 zusammen, welche jeweils in der Lage sind, ein Drehbewegungssignal DBS zu generieren, so dass die Steuerung 340 einerseits mittels der Stellungsinformationen SI Informationen über die Stellungen des Kugelhalsträgers 80 mit dem Kugelhals 40 relativ zur Schwenkachse 50 vorliegen hat und außerdem über das Drehbewegungssignal DBS erkennen kann, wie viele Umdrehungen der jeweilige Betätigungsmotor 324 beziehungsweise Schwenkmotor 334 durchgeführt hat, und daraus eine Drehbewegungsrelation ermittelt.

Arbeitet die Steuerung 340 im Schwenkbetriebsmodus SBM, so wird ausgehend von einer der Endstellungen, beispielsweise der Arbeitsstellung, seitens der Steuerung 340 der Betätigungsmotor 324 so angesteuert, dass dieser sich mit einer Drehrichtung bewegt, mit welcher zunächst ein Übergang der Verriegelungseinheit 180 von der Spannstellung in die Lösestellung erfolgt, wobei die Steuerung 340 einerseits durch die Stellungsinformation SI erkennen kann, ob sich der Kugelhalsträger 80 mit dem Kugelhals 40 in Richtung der Schwenkachse 50 bewegt oder nicht und andererseits durch das Drehbewegungssignal DBS des Drehbewegungssensors 362 erkennen kann, dass der Betätigungsmotor 324 aktiv ist und die Verriegelungseinheit 180 im Sinne eines Lösens eines Überführens derselben von der Spannstellung in die Lösestellung antreibt.

Bei einem Weiterdrehen des Betätigungsmotors 324 erfolgt ein Antrieb der Ausschiebeeinheit 280 und somit eine translatorische Bewegung des Kugelhalsträgers 80 von der Fixierstellung in die Schwenkstellung, die die Auswerteeinheit 358 aufgrund der durch die Sensoren 352 und 354 erfassten Beschleunigungswerte BEW in der X-Richtung erkennt.

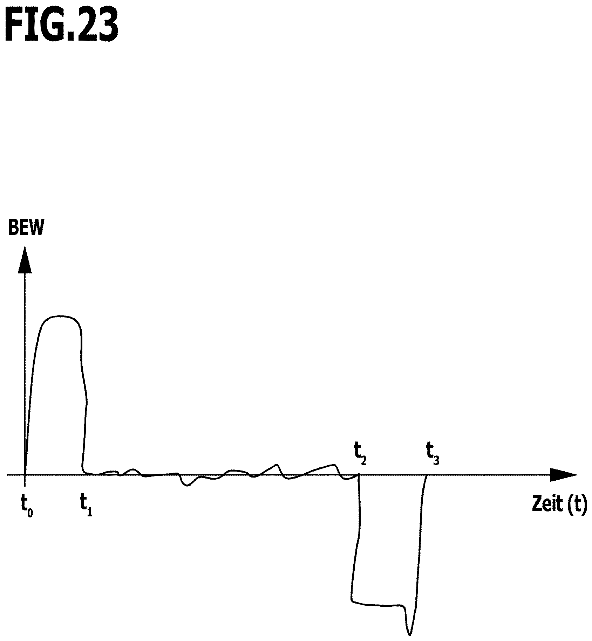

Beispielsweise tritt, wie in Fig. 23 dargestellt, zum Zeitpunkt t₀ beim Verlassen der Fixierstellung ein positiver Beschleunigungswert BEW1 auf, der bei Erreichen einer ungefähr konstanten Translationsgeschwindigkeit zum Zeitpunkt t₁ im Wesentlichen auf 0 abfällt, bis kurz vor Erreichen der durch einen Anschlag definierten Schwenkstellung zum Zeitpunkt t₂ die Steuerung 340 die translatorische Bewegung durch eine negative Beschleunigung abbremst, so dass beim Gegenlaufen gegen den die Schwenkstellung vorgebenden Anschlag zum Zeitpunkt t₃ nur noch eine kleine weitere negative Beschleunigungsspitze auftritt.

Die Auswerteeinheit 358 wertet das Auftreten und den Verlauf der Beschleunigungswerte BEW über der Zeit t mittels einer Verlaufsmusteranalyse aus und ist dadurch in der Lage, beispielsweise aufgrund der Größe und des Vorzeichens der Beschleunigungswerte BEW in Verbindung mit den Zeitpunkten t, zu denen diese auftreten, und beispielsweise einem Vergleich mit einem abgespeicherten Verlaufsmuster, festzustellen, ob der Kugelhalsträger 80 mit dem Kugelhals 40 über eine der Distanz zwischen der Fixierstellung und der Schwenkstellung entsprechende Strecke bewegt wurde und insbesondere auch ob der die Schwenkstellung definierende Anschlag erreicht wurde.

Dieselbe Vorgehensweise mittels einer Verlaufsmusteranalyse lässt sich auch zur Überwachung der translatorischen Bewegung von der Schwenkstellung in die Fixierstellung einsetzen.

Wird bei der Verlaufsmusteranalyse festgestellt, dass die Beschleunigungswerte BEW und die Zeitpunkte t, zu welchen diese auftreten, signifikant von dem abgespeicherten Verlaufsmuster abweichen, so erkennt die Steuerung 340, dass entweder die Schwenkstellung oder die Fixierstellung nicht erreicht wurden und folglich eine Störung vorliegt.

Somit kann beispielsweise bei der das Erreichen der Schwenkstellung anzeigenden Stellungsinformation SI die Steuerung 340 den Betätigungsmotor 324 kurz vor Erreichen der Schwenkstellung stoppen und nach Beginn des Verschwenkens des Kugelhalsträgers 80 in die Ausgangsstellung zurückbewegen.

Sobald die Freilaufstellung erreicht ist, erfolgt durch Einschalten des Schwenkmotors 334 durch die Steuerung 340 ein Schwenken des Kugelhalsträgers 80 mit dem Kugelhals 40 um die Schwenkachse 50 und dies ist für die Steuerung 340 anhand der Stellungsinformation SI, ebenfalls erzeugt durch das Sensorsystem 350, erkennbar, wobei aus der dabei beispielsweise konstant bleibenden Drehbewegungsrelation erkennbar ist, dass ein Antreiben der Schwenkbewegung erfolgt.

Ferner ist aus der Stellungsinformation SI erkennbar, dass der Kugelhalsträger 80 mit dem Kugelhals 40 die eine Endstellung, also beispielsweise die Arbeitsstellung A, verlässt und sich in Richtung der zweiten Endstellung, beispielsweise der Ruhestellung R, bewegt, und außerdem ist über die Stellungsinformation SI erkennbar, ob eine Schwenkbewegung über einen Schwenkwinkel durchgeführt wurde, der dem Schwenkwinkel zwischen der einen Endstellung und der anderen Endstellung entspricht, so dass über die Stellungsinformation SI seitens der Steuerung 340 erkennbar ist, dass die andere Endstellung erreicht wurde.

Bei Erreichen der Endstellung erfolgt Abschalten des Schwenkmotors 334 und der Schwenklagerkörper 82 führt eine translatorische Bewegung von der Schwenkstellung in die Fixierstellung aus, welche die Sensoren 352 und 354 beispielsweise durch die beschriebene Verlaufsmusteranalyse erfassen und außerdem geht die Verriegelungseinheit 180 von der Lösestellung in die Spannstellung über.

In gleicher Weise wird im Schwenkbewegungsmodus SBM der umgekehrte Schwenkvorgang von der erreichten und durch die Verriegelungseinheit 180 blockierten Endstellung in die jeweils andere Endstellung durchgeführt.

Der erste Sensor 352 kann aber auch als Beschleunigungssensor für die Erfassung der Schwenkbewegung eingesetzt werden, da dieser bei einer Schwenkbewegung um die Schwenkachse 50 Beschleunigungen in seiner YZ-Ebene detektiert, und die dabei entstehenden Beschleunigungssignale können allein oder ergänzend zu den Neigungssignalen des ersten Sensors 352 zur Bestimmung der Stellungsinformationen durch die Auswerteeinheit 358 eingesetzt werden.

Ferner kann der Sensor 354 außerdem zur Erfassung von Längsbeschleunigungen in der X-Richtung des Fahrzeugs und Querbeschleunigungen in der Y-Richtung des Fahrzeugs sowie von Vertikalbeschleunigungen in der Z-Richtung des Fahrzeugs eingesetzt werden, um beispielsweise im Fahrbetrieb Fahrdynamikinformationen zu erhalten.

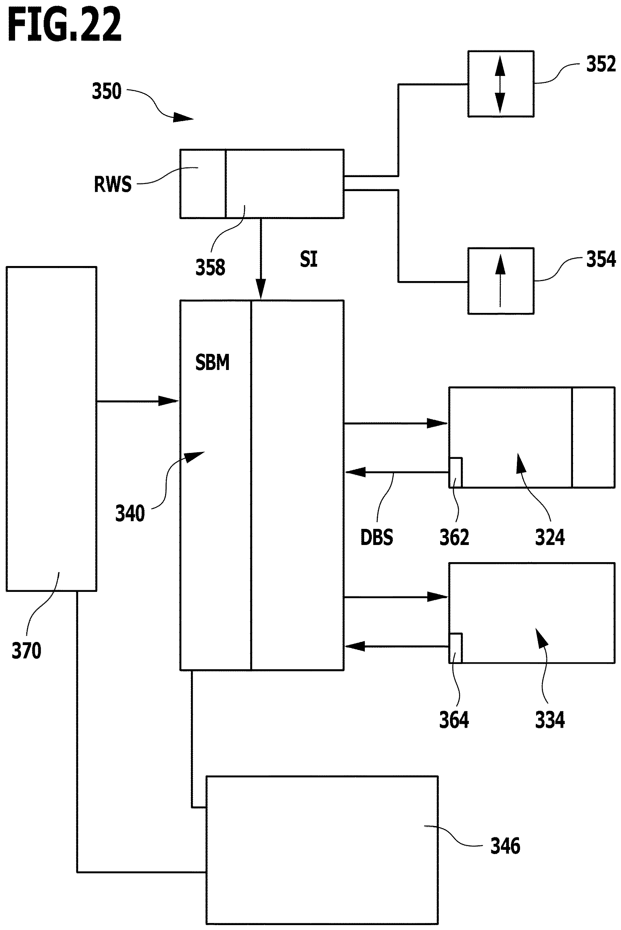

Wie beispielhaft in Fig. 22 dargestellt, ist es bei dem beschriebenen Ausführungsbeispiel vorteilhafterweise möglich, die Stellungsinformationen SI dahingehend auszuwerten, dass eine Visualisierung der Lage des Kugelhalses 40 relativ zur Lagereinheit 30 mittels einer Visualisierungseinheit 346 erfolgen kann, so dass eine Bedienungsperson die Bewegung des Kugelhalses 40 von der Arbeitsstellung A in die Ruhestellung R oder umgekehrt verfolgen kann.

Außerdem können auf der Visualisierungseinheit 346 vorteilhafterweise auch Betriebsmodi und/oder Betriebszustände und/oder Störungen der Ablaufsteuerung 370 und/oder der Steuerung 340, und/oder des Betätigungsmotors 324 und/oder des Schwenkmotors 334, sowie der Verriegelungseinheit angezeigt werden.

Dies ist insbesondere auch dann vorteilhaft, wenn Störungen in dem Bewegungsablauf auftreten, so dass eine Bedienungsperson die Art der Störung erfassen kann.

## Patentansprüche

1. Anhängekupplung, umfassend eine fahrzeugfest an einem Heckbereich (14) einer Fahrzeugkarosserie (12), insbesondere mittels einer Halteeinheit (26), montierbare Lagereinheit (30), welche eine Lagerbasis (60) und einen an dieser bewegbar gelagerten Kugelhalsträger (80) aufweist, und ferner umfassend einen Kugelhals (40), der an einem ersten Ende (42) fest mit dem Kugelhalsträger (80) verbunden ist und an einem zweiten Ende (44) eine Kupplungskugel (46) trägt und der durch das Bewegen des Kugelhalsträgers (80) relativ zur Lagerbasis (60) zwischen zwei Endstellungen bewegbar ist, von denen eine Arbeitsstellung (A) ist, in welcher der Kugelhals (40) sich im Wesentlichen in einer vertikalen Längsmittelebene (LM) der Anhängekupplung erstreckt, die insbesondere im an der Fahrzeugkarosserie (12) montierten Zustand mit einer vertikalen Fahrzeuglängsmittelebene (FL) der Fahrzeugkarosserie (12) zusammenfällt, und von denen die andere eine Ruhestellung (R) ist, in welcher sich der Kugelhals quer zur vertikalen Längsmittelebene (LM) der Anhängekupplung erstreckt, wobei ein Sensorsystem (350) einen ersten, mit dem Kugelhalsträger (80) oder dem Kugelhals (40) mitschwenkbar angeordneten Sensor (352) und eine mit dem ersten Sensor verbundene Auswerteeinheit (358) umfasst,
**dadurch gekennzeichnet, dass** zur Erfassung der Stellung des Kugelhalses (40) relativ zur Lagerbasis (60) das Sensorsystem (350) vorgesehen ist, welches die Stellungen des Kugelhalses (40) relativ zu der fahrzeugfesten Lagerbasis (60) erfasst und eine für die jeweilige Stellung des Kugelhalses (40) repräsentative Stellungsinformation (SI) erzeugt, dass die Auswerteeinheit (358) zur Bestimmung der Stellung des Kugelhalses (40) Sensorsignale des ersten Sensors (352) mit der jeweiligen Stellung zugeordneten Referenzwerten vergleicht und dadurch die Stellungsinformationen (SI) für den Kugelhals (40) erzeugt und dass das Sensorsystem (350) einen zweiten, mit der Lagerbasis (60) fest verbundenen Sensor (354) umfasst und dass die Auswerteeinheit (358) mit dem ersten Sensor (352) und dem zweiten Sensor (354) verbunden ist und die Differenzwerte zwischen dem ersten Sensor (352) und dem zweiten Sensor (354) erfasst und zur Bestimmung der Stellung des Kugelhalsträgers mit abgespeicherten, der jeweiligen Drehlage zugeordneten Referenzwerten für die Differenzwerte vergleicht und dadurch die Stellungsinformationen (SI) für den Kugelhals (40) erzeugt.

2. Anhängekupplung nach Anspruch 1, **dadurch gekennzeichnet, dass** das Sensorsystem (350) mindestens einen die Arbeitsstellung (A) und die Ruhestellung (R) umfassenden Stellungsbereich des Kugelhalses (40) erfasst, dass insbesondere das Sensorsystem (350) die zwischen der Arbeitsstellung (A) und der Ruhestellung (R) liegenden Zwischenstellungen des Kugelhalses (40) erfasst, und/oder dass das Sensorsystem (350) die Stellungen des Kugelhalses (40) von der Arbeitsstellung (A) bis zur Ruhestellung (R) und umgekehrt erfasst.

3. Anhängekupplung nach einem der voranstehenden Ansprüche, **dadurch gekennzeichnet, dass** das Sensorsystem (350) eine Auswerteeinheit (358) umfasst, welche die von mindestens einem Sensor (352, 354) des Sensorsystems (350) erfassten Stellungen des Kugelhalses (40) mit Referenzstellungen vergleicht und dadurch die Stellungsinformationen ermittelt, dass insbesondere die Auswerteeinheit (358) die die Arbeitsstellung (A) und die Ruhestellung (R) des Kugelhalses (40) eindeutig anzeigenden Stellungsinformationen (SI) erzeugt und dass insbesondere die Auswerteeinheit (358) die die zwischen den Endstellungen liegenden Zwischenstellungen des Kugelhalses (40) eindeutig anzeigenden Stellungsinformationen (SI) erzeugt.

4. Anhängekupplung nach einem der voranstehenden Ansprüche, **dadurch gekennzeichnet, dass** die Anhängekupplung (10) mindestens eine motorische Antriebseinheit (324, 334) für die Ausführung der Bewegung des Kugelhalses (40) und eine mit der Auswerteeinheit (358) zusammenwirkende und die Stellungsinformationen heranziehende Bewegungssteuerung (340) zum Ansteuern der mindestens einen Antriebseinheit (324, 334) umfasst und dass die Bewegungssteuerung (340) unter Berücksichtigung der Stellungsinformationen die Antriebseinheit (324, 334) steuert und dass insbesondere die Bewegungssteuerung (340) einen Bewegungsbetriebsmodus aufweist, in welchem ein Bewegen des Kugelhalses (40) von einer der Endstellungen (A, R) zur anderen der Endstellungen (A, R) erfolgt.

5. Anhängekupplung nach Anspruch 4, **dadurch gekennzeichnet, dass** die Bewegungssteuerung (340) im Bewegungsbetriebsmodus einen die Bewegung antreibenden Antriebsmotor (324, 334) der mindestens einen Antriebseinheit bei Erreichen der jeweiligen Endstellung (A, R) als Abschluss eines Einfahrvorgangs in diese Endstellung (A, R) abschaltet.

6. Anhängekupplung nach einem der Ansprüche 4 oder 5, **dadurch gekennzeichnet, dass** die Bewegungssteuerung (340) im Bewegungsbetriebsmodus im Verlauf des Bewegens des Kugelhalses (40) von einer Endstellung (A, R) zur anderen Endstellung (A, R) die Antriebseinheit (324, 334) derart ansteuert, dass diese den Kugelhals (40) mit einem definierten Geschwindigkeitsprofil bewegt.

7. Anhängekupplung nach Anspruch 6, **dadurch gekennzeichnet, dass** das definierte Geschwindigkeitsprofil für die Bewegung des Kugelhalses (40) zwischen den Endstellungen (A, R) eine Bewegungsphase mit konstanter Geschwindigkeit umfasst, und/oder dass das Geschwindigkeitsprofil den Endstellungen (A, R) zugeordnete Beschleunigungs- und Verzögerungsphasen umfasst.

8. Anhängekupplung nach einem der voranstehenden Ansprüche, **dadurch gekennzeichnet, dass** die Bewegungssteuerung (340) durch Vergleich der Stellungsinformationen (SI) des Kugelhalses (40) mit einem Drehbewegungssignal (DBS) des Antriebsmotors der mindestens einen Antriebseinheit (324, 334) die Bewegung des Kugelhalses (40) und/oder eine Blockierung der Bewegung überwacht.

9. Anhängekupplung nach Anspruch 8, **dadurch gekennzeichnet, dass** die Bewegungssteuerung (340) durch Vergleich der Stellungsinformationen (SI) des Kugelhalses (40) mit dem Drehbewegungssignal (DBS) des Antriebsmotors eine Bewegungsrelation ermittelt und mit abgespeicherten Referenzwerten für die Bewegungsrelation vergleicht.

10. Anhängekupplung nach Anspruch 9, **dadurch gekennzeichnet, dass** die Bewegungssteuerung (340) bei einem Abweichen von der ermittelten Bewegungsrelation von der vorgegebenen Bewegungsrelation ein Störungssignal erzeugt.

11. Anhängekupplung nach einem der voranstehenden Ansprüche, **dadurch gekennzeichnet, dass** die Anhängekupplung eine Blockiereinrichtung (170) zur Fixierung des Kugelhalses (40) in den Endstellungen (A, R) umfasst und dass die Blockiereinrichtung (170) durch eine Antriebseinheit (324) von einer Blockierstellung in eine Freigabestellung überführbar ist und dass die mit der Auswerteeinheit (358) zusammenwirkende und die Stellungsinformationen (SI) heranziehende Bewegungssteuerung (340) zur Ansteuerung der Antriebseinheit (324) unter Berücksichtigung der Stellungsinformationen (SI) vorgesehen ist, dass insbesondere die Bewegungssteuerung (340) in einem Bewegungsbetriebsmodus die Antriebseinheit (324) so ansteuert, dass diese die Blockiereinrichtung (170) zu Beginn der Bewegung von der Blockierstellung in die Freigabestellung überführt.

12. Anhängekupplung nach Anspruch 11, **dadurch gekennzeichnet, dass** die Bewegungssteuerung (340) in einem Bewegungsbetriebsmodus die Antriebseinheit (324, 334) so ansteuert, dass die Blockiereinrichtung (170) spätestens bei Erreichen der nächstfolgenden Endstellung in die Blockierstellung übergeht, dass insbesondere die Bewegungssteuerung (340) in dem Schwenkbetriebsmodus bei Erreichen der nächstfolgenden Endstellung (R, A) durch Ansteuern der Antriebseinheit (324, 334) die Blockiereinrichtung (170) in die Blockierstellung bewegt, und/oder dass die Bewegungssteuerung (340) in einem Bewegungsbetriebsmodus während der Bewegung des Kugelhalses (40) zwischen den Endstellungen (A, R) die Blockiereinrichtung (170) in eine Blockierbereitschaftsstellung bewegt, aus welcher die Blockiereinrichtung (170) selbsttätig in die Blockierstellung übergeht.

13. Anhängekupplung nach einem der voranstehenden Ansprüche , **dadurch gekennzeichnet, dass** der erste Sensor (352) und der zweite Sensor (354) Neigungssensoren sind, dass insbesondere der erste Sensor (352) und der zweite Sensor (354) als Neigungssensoren betreibbare, Bewegungen im Raum detektierende Sensoren, beispielsweise Beschleunigungssensoren, ausgebildet sind, und/oder dass der erste und/oder der zweite Sensor (352, 354) Neigungen um mindestens eine Neigungsachse (x) erfassen und insbesondere die Sensoren Neigungswerte (N1, N2) in Bezug auf eine Schwerkraftrichtung (SR) erfassen.

14. Anhängekupplung nach einem der voranstehenden Ansprüche, **dadurch gekennzeichnet, dass** die Auswerteeinheit (358) zur Bestimmung der Stellungsinformation (SI) des Kugelhalses (40) Neigungsdifferenzwerte erfasst, die aus Neigungswerten (N1, N2) als Messwerte der Sensoren (352, 354) gebildet sind.

15. Anhängekupplung nach einem der voranstehenden Ansprüche, **dadurch gekennzeichnet, dass** die Auswerteeinheit (358) in mindestens einer der Endstellungen (A, R) eine Neigungsdifferenz zwischen einer Neigung des ersten Sensors (352) und einer Neigung des zweiten Sensors (354) erfasst und dass insbesondere zur Bestimmung der Stellungsinformationen (SI) des Kugelhalses (40) basierend auf der ermittelten Neigungsdifferenz der Verlauf der Neigungswerte des ersten Sensors (352) bei einer Bewegung von einer Endstellung (A) zur anderen Endstellung (R) ermittelt wird.

16. Anhängekupplung nach einem der voranstehenden Ansprüche, **dadurch gekennzeichnet, dass** durch die Erfassung der Neigungswerte mindestens des ersten Sensors (352) mindestens rotatorische Bewegungen des Kugelhalsträgers (80) relativ zur Lagerbasis (60) um mindestens eine Schwenkachse (50) erfasst werden, dass insbesondere bei dem ersten Sensor (352) seine für die Neigungserfassung relevante Z-Achse (Z) und eine weitere Achse (Y) seines kartesischen Koordinatensystems parallel zur Schwenkebene (SE) ausgerichtet sind, dass insbesondere bei dem zweiten Sensor (354) seine für die Neigungserfassung relevante Z-Achse (Z) und eine weitere Achse (Y) seines kartesischen Koordinatensystems parallel zur Schwenkebene (SE) ausgerichtet sind.

17. Anhängekupplung nach einem der voranstehenden Ansprüche, **dadurch gekennzeichnet, dass** die Auswerteeinheit (358) mit mindestens einem der Sensoren (352, 354), insbesondere dem ersten Sensor (352), Beschleunigungen erfasst, dass insbesondere die Auswerteeinheit mit beiden Sensoren (352, 354) Beschleunigungen erfasst, und dass insbesondere die Auswerteeinheit (358) eine Beschleunigungsdifferenz zwischen dem ersten Sensor (352) und dem zweiten Sensor (354) erfasst und durch Bestimmung von Differenzwerten und insbesondere einen Vergleich mit Referenzwerten eine rotatorische und/oder translatorische Bewegung erfasst.

18. Anhängekupplung nach einem der voranstehenden Ansprüche, **dadurch gekennzeichnet, dass** die Auswerteeinheit (358) translatorische Bewegungen durch eine Verlaufsmusteranalyse von Beschleunigungswerten (BEW) erfasst.

19. Anhängekupplung nach einem der voranstehenden Ansprüche, **dadurch gekennzeichnet, dass** der Bewegungssteuerung (340) eine Visualisierungseinheit (346) zur Anzeige von Betriebsmodi und/oder Betriebszuständen und/oder Störungen zugeordnet ist.

## Claims

1. Trailer hitch, comprising a bearing unit (30) mountable, in particular by way of a mounting unit (26), on a rear end portion (14) of a vehicle body (12), in fixed relation to the vehicle, said bearing unit (30) having a bearing base (60) and a ball neck carrier (80) supported for movement on the bearing base (60), and further comprising a ball neck (40) which at a first end (42) is fixedly connected to the ball neck carrier (80) and at a second end (44) carries a hitch ball (46) and which is movable, by the movement of the ball neck carrier (80) relative to the bearing base (60), between two final positions, one of which is an operating position (A) in which the ball neck (40) extends substantially in a vertical longitudinal center plane (LM) of the trailer hitch which, particularly in the state of being mounted to the vehicle body (12), is coincident with a vertical vehicle longitudinal center plane (FL) of the vehicle body (12), and the other one of which is a rest position (R) in which the ball neck extends transversely with respect to the vertical longitudinal center plane (LM) of the trailer hitch, wherein a sensor system (350) comprises a first sensor (352) which is arranged for co-pivotal movement with the ball neck carrier (80) or the ball neck (40) and comprises an evaluation unit (358) connected to the first sensor, **characterised in that** the sensor system (350) is provided for determining the position of the ball neck (40) relative to the bearing base (60), the sensor system detecting the positions of the ball neck (40) relative to the bearing base (60) which is fixed to the vehicle and generating position information (SI) representative of the respective position of the ball neck (40), **in that** the evaluation unit (358), for determining the position of the ball neck (40), compares sensor signals from the first sensor (352) with the reference values associated with the current position and thereby generates the position information (SI) for the ball neck (40) and **in that** the sensor system (350) comprises a second sensor (354) fixedly connected to the bearing base (60) and **in that** the evaluation unit (358) is connected to the first sensor (352) and the second sensor (354) and detects the difference values between the first sensor (352) and the second sensor (354) and, for determining the position of the ball neck carrier, compares these with the stored reference values for the difference values associated with the current rotary position and thereby generates the position information (SI) for the ball neck (40).

2. Trailer hitch in accordance with claim 1, **characterized in that** the sensor system (350) detects at least one position range of the ball neck (40) which encompasses the operating position (A) and the rest position (R), **in that** in particular the sensor system (350) detects the intermediate positions of the ball neck (40) lying between the operating position (A) and the rest position (R), and/or **in that** the sensor system (350) detects the positions of the ball neck (40) from the operating position (A) to the rest position (R) and vice versa.

3. Trailer hitch in accordance with any one of the preceding claims, **characterized in that** the sensor system (350) comprises an evaluation unit (358), which compares the positions of the ball neck (40) detected by at least one sensor (352, 354) of the sensor system (350) with reference positions and thereby detects the position information, **in that** in particular the evaluation unit (358) generates the position information (SI) that provides unambiguous indication of the operating position (A) and the rest position (R) of the ball neck (40), and **in that** in particular the evaluation unit (358) generates the position information (SI) that provides unambiguous indication of the intermediate positions of the ball neck (40) lying between the final positions.

4. Trailer hitch in accordance with any one of the preceding claims, **characterized in that** the trailer hitch (10) comprises at least one motorized drive unit (324, 334) for performing the movement of the ball neck (40) and a motion controller (340) which cooperates with the evaluation unit (358) and makes use of the position information for controlling the at least one drive unit (324, 334) and **in that** the motion controller (340) controls the drive unit (324, 334) taking into account the position information, and **in that** in particular the motion controller (340) comprises a movement mode of operation in which the ball neck (40) is moved from one of the final positions (A, R) to the other final position (A, R).

5. Trailer hitch in accordance with claim 4, **characterized in that** the motion controller (340) in the movement mode of operation switches off a drive motor (324, 334), driving the movement, of the at least one drive unit when the respective final position (A, R) is reached as the conclusion of a process of entry into this final position (A, R).

6. Trailer hitch in accordance with either of claims 4 or 5, **characterized in that** the motion controller (340) in the movement mode of operation, in the course of moving the ball neck (40) from one final position (A, R) to the other final position (A, R), controls the drive unit (324, 334) in such a manner that same moves the ball neck (40) with a defined speed profile.

7. Trailer hitch in accordance with claim 6, **characterized in that** the defined speed profile for the movement of the ball neck (40) between the final positions (A, R) comprises a constant speed movement phase, and/or **in that** the speed profile comprises acceleration phases and deceleration phases associated with the final positions (A, R).

8. Trailer hitch in accordance with any one of the preceding claims, **characterized in that** the motion controller (340) monitors the movement of the ball neck (40) and/or blocking of the movement by comparing the position information (SI) of the ball neck (40) with a rotary movement signal (DBS) of the drive motor of the at least one drive unit (324, 334).

9. Trailer hitch in accordance with claim 8, **characterized in that** the motion controller (340), by comparing the position information (SI) of the ball neck (40) with the rotary movement signal (DBS) of the drive motor, determines a movement relationship and compares this with stored reference values for the movement relationship.

10. Trailer hitch in accordance with claim 9, **characterized in that** the motion controller (340) generates a fault signal if the determined movement relationship deviates from the predetermined movement relationship.

11. Trailer hitch in accordance with any one of the preceding claims, **characterized in that** the trailer hitch comprises a blocking device (170) for fixing the ball neck (40) in the final positions (A, R) and **in that** the blocking device (170) is transferable from a blocking position to a release position by a drive unit (324) and **in that** the motion controller (340) which cooperates with the evaluation unit (358) and makes use of the position information (SI) is provided for controlling the drive unit (324) taking into account the position information (SI), **in that** in particular the motion controller (340) in a movement mode of operation controls the drive unit (324) in such a manner that the drive unit (324) transfers the blocking device (170) from the blocking position to the release position at the beginning of the movement.

12. Trailer hitch in accordance with claim 11, **characterized in that** the motion controller (340) in a movement mode of operation controls the drive unit (324, 334) in such a manner that the blocking device (170) transitions to the blocking position no later than when the next following final position is reached, **in that** in particular the motion controller (340) in the pivoting mode of operation, by controlling the drive unit (324, 334), moves the blocking device (170) to the blocking position when the next following final position (R, A) is reached, and/or in that the motion controller (340) in a movement mode of operation, during the movement of the ball neck (40) between the final positions (A, R), moves the blocking device (170) to a blocking standby position from which the blocking device (170) transitions to the blocking position automatically.

13. Trailer hitch in accordance with any one of the preceding claims, **characterized in that** the first sensor (352) and the second sensor (354) are inclination sensors, **in that** in particular the first sensor (352) and the second sensor (354) are configured as sensors operable as inclination sensors detecting movements in space, for example acceleration sensors, and/or **in that** the first and/or the second sensor (352, 354) detect inclinations about at least one inclination axis (x), and in particular the sensors detect inclination values (N1, N2) with respect to a direction of gravity (SR).

14. Trailer hitch in accordance with any one of the preceding claims, **characterized in that** the evaluation unit (358), for determining the position information (SI) of the ball neck (40), detects inclination difference values which are formed from inclination values (N1, N2) as measuring values of the sensors (352, 354).

15. Trailer hitch in accordance with any one of the preceding claims, **characterized in that** the evaluation unit (358) detects an inclination difference between an inclination of the first sensor (352) and an inclination of the second sensor (354) in at least one of the final positions (A, R), and **in that** in particular for determining the position information (SI) of the ball neck (40) based on the determined inclination difference, the course of the inclination values of the first sensor (352) is determined in a movement from one final position (A) to the other final position (R).

16. Trailer hitch in accordance with any one of the preceding claims, **characterized in that** by the detection of the inclination values of at least the first sensor (352), at least rotary movements of the ball neck carrier (80) relative to the bearing base (60) about at least one pivot axis (50) are detected, **in that** in particular the first sensor (352) has its Z axis (Z), which is relevant for inclination detection, and a further axis (Y) of its Cartesian coordinate system oriented in parallel relation to the pivoting plane (SE), **in that** in particular the second sensor (354) has its Z axis (Z), which is relevant for inclination detection, and a further axis (Y) of its Cartesian coordinate system oriented in parallel relation to the pivoting plane (SE).

17. Trailer hitch in accordance with any one of the preceding claims, **characterized in that** the evaluation unit (358) detects accelerations with at least one of the sensors (352, 354), in particular the first sensor (352), **in that** in particular the evaluation unit detects accelerations with both sensors (352, 354), and **in that** in particular the evaluation unit (358) detects an acceleration difference between the first sensor (352) and the second sensor (354) and detects a rotary and/or translatory movement by determining difference values and, in particular, by comparing these with reference values.

18. Trailer hitch in accordance with any one of the preceding claims, **characterized in that** the evaluation unit (358) detects translatory movements by a course pattern analysis of acceleration values (BEW).

19. Trailer hitch in accordance with any one of the preceding claims, **characterized in that** the motion controller (340) has associated therewith a visualization unit (346) for indicating operating modes and/or operating states and/or disturbances.

## Revendications

1. Attelage de remorque, comprenant une unité de palier (30) pouvant être montée de façon fixe au véhicule contre une région arrière (14) d'une carrosserie de véhicule (12), en particulier au moyen d'une unité de maintien (26), laquelle unité de palier présente une base de palier (60) et un porteur de col de rotule (80) monté de façon amovible contre celle-ci, et comprenant en outre un col de rotule (40) qui, au niveau d'une première extrémité (42), est relié de façon fixe au porteur de col de rotule (80) et, au niveau d'une seconde extrémité (44), porte une rotule d'attelage (46) et qui est déplaçable entre deux positions d'extrémité par le déplacement du porteur de col de rotule (80) par rapport à la base de palier (60), dont l'une est une position de travail (A) dans laquelle le col de rotule (40) s'étend essentiellement dans un plan central longitudinal (LM) vertical de l'attelage de remorque, qui, en particulier à l'état monté contre la carrosserie de véhicule (12), coïncide avec un plan central longitudinal de véhicule (FL) vertical de la carrosserie de véhicule (12), et dont l'autre est une position de repos (R) dans laquelle le col de rotule s'étend transversalement au plan central longitudinal (LM) vertical de l'attelage de remorque, dans lequel un système de capteurs (350) comprend un premier capteur (352) agencé de façon à pouvoir pivoter ensemble avec le porteur de col de rotule (80) ou le col de rotule (40) et une unité d'exploitation (358) reliée au premier capteur,
**caractérisé en ce que**, afin de saisir la position du col de rotule (40) par rapport à la base de palier (60), est prévu le système de capteurs (350), lequel saisit les positions du col de rotule (40) par rapport à la base de palier (60) fixée au véhicule et produit une information de position (SI) représentative de la position respective du col de rotule (40), **en ce que** l'unité d'exploitation (358), afin de déterminer la position du col de rotule (40), compare des signaux de capteur du premier capteur (352) avec des valeurs de référence attribuées à la position respective et produit ainsi les informations de position (SI) pour le col de rotule (40) et **en ce que** le système de capteurs (350) comprend un second capteur (354) relié de façon fixe à la base de palier (60) et **en ce que** l'unité d'exploitation (358) est reliée au premier capteur (352) et au second capteur (354) et saisit les valeurs différentielles entre le premier capteur (352) et le second capteur (354) et, afin de déterminer la position porteur de col de rotule, les compare pour les valeurs différentielles avec des valeurs de référence attribuées à la situation de rotation respective et mémorisées, et produit ainsi les informations de position (SI) pour le col de rotule (40).

2. Attelage de remorque selon la revendication 1, **caractérisé en ce que** le système de capteurs (350) saisit au moins une région de position du col de rotule (40) comprenant la position de travail (A) et la position de repos (R), **en ce qu'**en particulier le système de capteurs (350) saisit les positions intermédiaires du col de rotule (40) se situant entre la position de travail (A) et la position de repos (R), et/ou **en ce que** le système de capteurs (350) saisit les positions du col de rotule (40) depuis la position de travail (A) jusqu'à la position de repos (R) et inversement.

3. Attelage de remorque selon l'une des revendications précédentes, **caractérisé en ce que** le système de capteurs (350) comprend une unité d'exploitation (358), laquelle compare les positions du col de rotule (40) saisies par au moins un capteur (352, 354) du système de capteurs (350) avec des positions de référence et établit ainsi les informations de position, **en ce qu'**en particulier l'unité d'exploitation (358) produit les informations de position (SI) indiquant clairement la position de travail (A) et la position de repos (R) du col de rotule (40) et **en ce qu'**en particulier l'unité d'exploitation (358) produit les informations de position (SI) indiquant clairement les positions intermédiaires du col de rotule (40) se situant entre les positions d'extrémité.

4. Attelage de remorque selon l'une des revendications précédentes, **caractérisé en ce que** l'attelage de remorque (10) comprend au moins une unité d'entraînement (324, 334) motorisée pour l'exécution du déplacement du col de rotule (40) et une commande de déplacement (340) coopérant avec l'unité d'exploitation (358) et utilisant les informations de position pour piloter la au moins une unité d'entraînement (324, 334) et **en ce que** la commande de déplacement (340) commande l'unité d'entraînement (324, 334) en tenant compte des informations de position et **en ce qu'**en particulier la commande de déplacement (340) présente un mode de fonctionnement de déplacement dans lequel un déplacement du col de rotule (40) s'effectue depuis une des positions d'extrémité (A, R) vers l'autre des positions d'extrémité (A, R).

5. Attelage de remorque selon la revendication 4, **caractérisé en ce que** dans le mode de fonctionnement de déplacement la commande de déplacement (340) éteint un moteur d'entraînement (324, 334) entraînant le déplacement de la au moins une unité d'entraînement lorsque la position d'extrémité (A, R) respective a été atteinte en tant qu'achèvement d'un processus d'engagement dans cette position d'extrémité (A, R).

6. Attelage de remorque selon l'une des revendications 4 ou 5, **caractérisé en ce que** dans le mode de fonctionnement de déplacement la commande de déplacement (340) au cours du déplacement du col de rotule (40) depuis une position d'extrémité (A, R) vers l'autre position d'extrémité (A, R) pilote l'unité d'entraînement (324, 334) de telle sorte que celle-ci déplace le col de rotule (40) avec un profil de vitesse défini.

7. Attelage de remorque selon la revendication 6, **caractérisé en ce que** le profil de vitesse défini pour le déplacement du col de rotule (40) entre les positions d'extrémité (A, R) comprend une phase de déplacement avec une vitesse constante, et/ou **en ce que** le profil de vitesse comprend des phases d'accélération et de décélération attribuées aux positions d'extrémité (A, R) .

8. Attelage de remorque selon l'une des revendications précédentes, **caractérisé en ce que**, par comparaison des informations de position (SI) du col de rotule (40) avec un signal de déplacement de rotation (DBS) du moteur d'entraînement de la au moins une unité d'entraînement (324, 334), la commande de déplacement (340) surveille le déplacement du col de rotule (40) et/ou un blocage du déplacement.

9. Attelage de remorque selon la revendication 8, **caractérisé en ce que**, par comparaison des informations de position (SI) du col de rotule (40) avec le signal de déplacement de rotation (DBS) du moteur d'entraînement, la commande de déplacement (340) établit une relation de déplacement et la compare avec des valeurs de référence mémorisées pour la relation de déplacement.

10. Attelage de remorque selon la revendication 9, **caractérisé en ce que** la commande de déplacement (340) produit un signal d'incident lorsque la relation de déplacement établie s'écarte de la relation de déplacement prédéfinie.

11. Attelage de remorque selon l'une des revendications précédentes, **caractérisé en ce que** l'attelage de remorque comprend un dispositif de blocage (170) pour la fixation du col de rotule (40) dans les positions d'extrémité (A, R) et **en ce que** le dispositif de blocage (170) peut être amené par une unité d'entraînement (324) d'une position de blocage à une position de libération et **en ce que** la commande de déplacement (340) coopérant avec l'unité d'exploitation (358) et utilisant les informations de position (SI) est prévue pour piloter l'unité d'entraînement (324) en tenant compte des informations de position (SI), **en ce qu'**en particulier, dans un mode de fonctionnement de déplacement, la commande de déplacement (340) pilote l'unité d'entraînement (324) de telle sorte que celle-ci amène le dispositif de blocage (170) au début du déplacement de la position de blocage à la position de libération.

12. Attelage de remorque selon la revendication 11, **caractérisé en ce que**, dans un mode de fonctionnement de déplacement, la commande de déplacement (340) pilote l'unité d'entraînement (324, 334) de telle sorte que le dispositif de blocage (170) passe dans la position de blocage au plus tard lorsque la position d'extrémité immédiatement suivante est atteinte, **en ce qu'**en particulier, dans le mode de fonctionnement de pivotement, la commande de déplacement (340) déplace par pilotage de l'unité d'entraînement (324, 334) le dispositif de blocage (170) dans la position de blocage lorsque la position d'extrémité (R, A) immédiatement suivante est atteinte, et/ou **en ce que**, dans un mode de fonctionnement de déplacement, la commande de déplacement (340) déplace le dispositif de blocage (170) dans une position de disponibilité au blocage pendant le déplacement du col de rotule (40) entre les positions d'extrémité (A, R), à partir de laquelle le dispositif de blocage (170) passe automatiquement dans la position de blocage.

13. Attelage de remorque selon l'une des revendications précédentes, **caractérisé en ce que** le premier capteur (352) et le second capteur (354) sont des capteurs d'inclinaison, **en ce qu'**en particulier le premier capteur (352) et le second capteur (354) sont conçus en tant que capteurs détectant des déplacements dans la pièce et actionnables en tant que capteurs d'inclinaison, par exemple des capteurs d'accélération, et/ou **en ce que** le premier et/ou le second capteur (352, 354) saisissent des inclinaisons autour au moins d'un axe d'inclinaison (x) et en particulier les capteurs saisissent des valeurs d'inclinaison (N1, N2) par rapport à une direction de gravité (SR).

14. Attelage de remorque selon l'une des revendications précédentes, **caractérisé en ce que**, afin de déterminer l'information de position (SI) du col de rotule (40), l'unité d'exploitation (358) saisit des valeurs différentielles d'inclinaison qui sont formées de valeurs d'inclinaison (N1, N2) en tant que valeurs mesurées des capteurs (352, 354).

15. Attelage de remorque selon l'une des revendications précédentes, **caractérisé en ce que** l'unité d'exploitation (358) saisit dans au moins une des positions d'extrémité (A, R) une différence d'inclinaison entre une inclinaison du premier capteur (352) et une inclinaison du second capteur (354) et **en ce qu'**en particulier, afin de déterminer les informations de position (SI) du col de rotule (40), est établi, sur la base de la différence d'inclinaison établie, l'évolution des valeurs d'inclinaison du premier capteur (352) lors d'un déplacement depuis une position d'extrémité (A) vers l'autre position d'extrémité (R).

16. Attelage de remorque selon l'une des revendications précédentes, **caractérisé en ce que**, par la saisie des valeurs d'inclinaison d'au moins le premier capteur (352), sont saisis au moins des déplacements rotatifs du porteur de col de rotule (80) par rapport à la base de palier (60) autour au moins d'un axe de pivotement (50), **en ce qu'**en particulier pour le premier capteur (352) son axe Z (Z) pertinent pour la saisie de l'inclinaison et un autre axe (Y) de son système de coordonnées cartésien sont orientés parallèlement au plan de pivotement (SE), **en ce qu'**en particulier pour le second capteur (354) son axe Z (Z) pertinent pour la saisie de l'inclinaison et un autre axe (Y) de son système de coordonnées cartésien sont orientés parallèlement au plan de pivotement (SE).

17. Attelage de remorque selon l'une des revendications précédentes, **caractérisé en ce que** l'unité d'exploitation (358) saisit des accélérations avec au moins un des capteurs (352, 354), en particulier le premier capteur (352), **en ce qu'**en particulier l'unité d'exploitation saisit des accélérations avec les deux capteurs (352, 354), et **en ce qu'**en particulier l'unité d'exploitation (358) saisit une différence d'accélération entre le premier capteur (352) et le second capteur (354) et saisit un déplacement rotatif et/ou de translation par détermination de valeurs différentielles et en particulier une comparaison avec des valeurs de référence.

18. Attelage de remorque selon l'une des revendications précédentes, **caractérisé en ce que** l'unité d'exploitation (358) saisit des déplacements de translation par une analyse de profil d'évolution de valeurs d'accélération (BEW).

19. Attelage de remorque selon l'une des revendications précédentes, **caractérisé en ce qu'**à la commande de déplacement (340) est attribuée une unité de visualisation (346) pour afficher des modes de fonctionnement et/ou des états de fonctionnement et/ou des incidents.
